(19) 

**Europäisches Patentamt**
**European Patent Office**
**Office européen des brevets**

(11) **EP 4 611 422 A1**

(12) **EUROPEAN PATENT APPLICATION**
published in accordance with Art. 153(4) EPC

(43) Date of publication:
**03.09.2025 Bulletin 2025/36**

(21) Application number: **23882946.9**

(22) Date of filing: **06.10.2023**

(51) International Patent Classification (IPC):
**H04W 24/08** (2009.01)   **H04W 76/10** (2018.01)
**H04W 76/27** (2018.01)   **H04W 24/10** (2009.01)

(52) Cooperative Patent Classification (CPC):
**H04W 24/08; H04W 24/10; H04W 76/10;**
**H04W 76/27**

(86) International application number:
**PCT/KR2023/015405**

(87) International publication number:
**WO 2024/090839 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.10.2022 US 202263419678 P**

(71) Applicant: **LG Electronics Inc.**
**Yeongdeungpo-gu**
**Seoul 07336 (KR)**

(72) Inventors:
• **PARK, Jinwoong**
  **Seoul 06772 (KR)**

• **HWANG, Jinyup**
  **Seoul 06772 (KR)**
• **YANG, Yoonoh**
  **Seoul 06772 (KR)**
• **LEE, Sangwook**
  **Seoul 06772 (KR)**
• **HUH, Joongkwan**
  **Seoul 06772 (KR)**
• **NA, Yunsik**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **MEASUREMENT**

(57)   A disclosure of the present specification (present disclosure) provides a method of performing communication by a UE. The method may comprise the steps of: transmitting a request message to a base station; performing first measurement on the basis of the UE being in an idle state or an inactive state and reception of first measurement information; and transmitting a completion message to the base station.

FIG. 13

## Description

## TECHNICAL FIELD

The present disclosure relates to a radio communication.

## BACKGROUND ART

3rd generation partnership project (3GPP) long-term evolution (LTE) is a technology for enabling high-speed packe t communications. Many schemes have been proposed for the LTE objective including those that aim to reduce user and prov ider costs, improve service quality, and expand and improve coverage and system capacity. The 3GPP LTE requires reduced cost per bit, increased service availability, flexible use of a frequency band, a simple structure, an open interface, and adequat e power consumption of a terminal as an upper-level requirement.

Work has started in international telecommunication union (ITU) and 3GPP to develop requirements and specificati ons for new radio (NR) systems. 3GPP has to identify and develop the technology components needed for successfully stand ardizing the new RAT timely satisfying both the urgent market needs, and the more long-term requirements set forth by the IT U radio communication sector (ITU-R) international mobile telecommunications (IMT)-2020 process. Further, the NR shoul d be able to use any spectrum band ranging at least up to 100 GHz that may be made available for wireless communications e ven in a more distant future.

The NR targets a single technical framework addressing all usage scenarios, requirements and deployment scenarios including enhanced mobile broadband (eMBB), massive machine-type-communications (mMTC), ultra-reliable and low laten cy communications (URLLC), etc. The NR shall be inherently forward compatible.

To improve the mobility of 5G NR, a solution is needed to quickly perform DC settings and/or CA settings when th e UE transitions from idle/inactive mode to connected mode.

## DISCLOSURE

## TECHNICAL SOLUTION

In one aspect, it provides a method by which the UE performs communication. The method may include: transmittin g a request message to the base station; performing a first measurement based on that the UE is in an idle or inactive state and the first measurement information has been received; and transmitting a complete message to the base station.

In another aspect, a device is provided that implements the method.

In one aspect, a method is provided for performing communication by a base station. The method may include recei ving a request message from a UE; transmitting a response message to the UE for the request message; and receiving a compl ete message from the UE.

In another aspect, a device is provided that implements the method.

## BRIEF DESCRIPTION OF THE DRAWINGS

FIG. 1 shows an example of a communication system to which implementations of the present disclosure is applied.

FIG. 2 shows an example of wireless devices to which implementations of the present disclosure is applied.

FIG. 3 shows an example of a wireless device to which implementations of the present disclosure is applied.

FIG. 4 is a diagram showing an example of a communication structure that can be provided in a 6G system

FIG. 5 shows an example of an electromagnetic spectrum.

FIGS. 6a to 6c are drawings illustrating an exemplary architecture for next generation mobile communications servi ces.

FIG. 7 illustrates an example procedure for activating a SCell.

FIG. 8 illustrates an example UE state, according to one embodiment of the present disclosure.

FIG. 9 illustrates an example of a procedure related to RRC Setup/Resume, according to one embodiment of the present disclosure.

FIG. 10 illustrates an example of a procedure related to RRC Resume, according to one embodiment of the present disclosure.

FIG. 11 illustrates a first example of operations related to measurement, according to one embodiment of the present disclosure.

FIG. 12 illustrates a second example in which operations related to measuring are performed, according to one embodiment of the present disclosure.

FIG. 13 illustrates an example of an operation according to one embodiment of the present disclosure.

## MODE FOR INVENTION

The following techniques, apparatuses, and systems may be applied to a variety of wireless multiple access systems. Examples of the multiple access systems include a code division multiple access (CDMA) system, a frequency division multi ple access (FDMA) system, a time division multiple access (TDMA) system, an orthogonal frequency division multiple acces s (OFDMA) system, a single carrier frequency division multiple access (SC-FDMA) system, and a multicarrier frequency div ision multiple access (MC-FDMA) system. CDMA may be embodied through radio technology such as universal terrestrial ra dio access (UTRA) or CDMA2000. TDMA may be embodied through radio technology such as global system for mobile com munications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 8 02.16 (WiMAX), IEEE 802.20, or evolved UTRA (E-UTRA). UTRA is a part of a universal mobile telecommunications syst em (UMTS). 3rd generation partnership project (3GPP) long term evolution (LTE) is a part of evolved UMTS (E-UMTS) usi ng E-UTRA. 3GPP LTE employs OFDMA in DL and SC-FDMA in UL. Evolution of 3GPP LTE includes LTE-A (advanced ), LTE-A Pro, and/or 5G NR (new radio).

The following techniques, apparatuses, and systems may be applied to a variety of wireless multiple access systems. Examples of the multiple access systems include a code division multiple access (CDMA) system, a frequency division multi ple access (FDMA) system, a time division multiple access (TDMA) system, an orthogonal frequency division multiple acces s (OFDMA) system, a single carrier frequency division multiple access (SC-FDMA) system, and a multicarrier frequency div ision multiple access (MC-FDMA) system. CDMA may be embodied through radio technology such as universal terrestrial ra dio access (UTRA) or CDMA2000. TDMA may be embodied through radio technology such as global system for mobile com munications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 8 02.16 (WiMAX), IEEE 802.20, or evolved UTRA (E-UTRA). UTRA is a part of a universal mobile telecommunications syst em (UMTS). 3rd generation partnership project (3GPP) long term evolution (LTE) is a part of evolved UMTS (E-UMTS) usi ng E-UTRA. 3GPP LTE employs OFDMA in DL and SC-FDMA in UL. Evolution of 3GPP LTE includes LTE-A (advanced ), LTE-A Pro, and/or 5G NR (new radio).

For convenience of description, implementations of the present disclosure are mainly described in regard to a 3GPP based wireless communication system. However, the technical features of the present disclosure are not limited thereto. For e xample, although the following detailed description is given based on a mobile communication system corresponding to a 3G PP based wireless communication system, aspects of the present disclosure that are not limited to 3GPP based wireless comm unication system are applicable to other mobile communication systems.

For terms and technologies which are not specifically described among the terms of and technologies employed in t he present disclosure, the wireless communication standard documents published before the present disclosure may be referen ced.

In the present disclosure, "A or B" may mean "only A", "only B", or "both A and B". In other words, "A or B" in th e present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". A ccordingly, "A/B" may mean "only A", "only B", or "both A and B". For example, "A, B, C" may mean "A, B or C".

In the present disclosure, "at least one of A and B" may mean "only A", "only B" or "both A and B". In addition, th e expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control inf ormation (PDCCH)", "PDCCH" may be proposed as an example of "control information". In other words, "control informatio n" in the present disclosure is not limited to "PDCCH", and "PDCCH" may be proposed as an example of "control informatio n". In addition, even when shown as "control information (i.e., PDCCH)", "PDCCH" may be proposed as an example of "con trol information".

Technical features that are separately described in one drawing in the present disclosure may be implemented separa tely or simultaneously.

Although not limited thereto, various descriptions, functions, procedures, suggestions, methods and/or operational fl owcharts of the present disclosure disclosed herein may be applied to various fields requiring wireless communication and/or connection (e.g., 5G) between devices.

Hereinafter, the present disclosure will be described in more detail with reference to drawings. The same reference n umerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equip ment) capable of wireless communication. An operation performed by a UE may be performed by a wireless communication device. A wireless communication device may also be referred to as a wireless device, wireless equipment, or the like. Herei nafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a n ext generation NodeB (gNB).

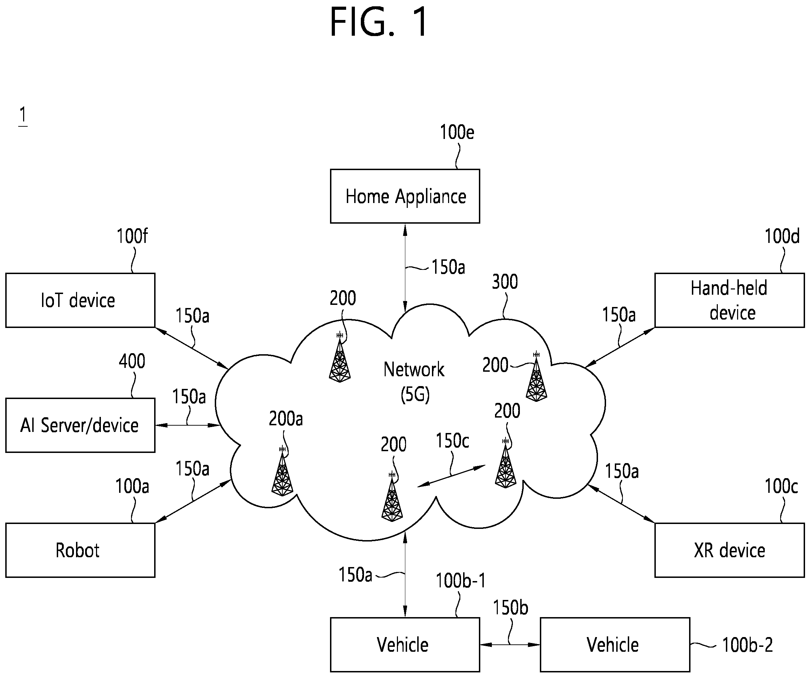

FIG. 1 shows an example of a communication system to which implementations of the present disclosure is applied.

The 5G usage scenarios shown in FIG. 1 are only exemplary, and the technical features of the present disclosure ma y be applied to other 5G usage scenarios which are not shown in FIG. 1.

Three main requirement categories for 5G include (1) a category of enhanced mobile broadband (eMBB), (2) a cate gory of massive machine type communication (mMTC), and (3) a category of ultra-reliable and low latency communications ( URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainm ent applications in cloud and augmented reality. Data is one of 5G core motive forces and, in a 5G era, a dedicated voice servi ce may not be provided for the first time. In 5G, it is expected that voice will be simply processed as an application program u sing data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time inf ormation and alarm for users. Cloud storage and applications are rapidly increasing in a mobile communication platform and may be applied to both work and entertainment. The cloud storage is a special use case which accelerates growth of uplink da ta transmission rate. 5G is also used for remote work of cloud. When a tactile interface is used, 5G demands much lower end-to-end latency to maintain user good experience. Entertainment, for example, cloud gaming and video streaming, is another c ore element which increases demand for mobile broadband capability. Entertainment is essential for a smartphone and a tablet in any place including high mobility environments such as a train, a vehicle, and an airplane. Other use cases are augmented r eality for entertainment and information search. In this case, the augmented reality requires very low latency and instantaneou s data volume.

In addition, one of the most expected 5G use cases relates a function capable of smoothly connecting embedded sen sors in all fields, i.e., mMTC. It is expected that the number of potential Internet-of-things (IoT) devices will reach 204 hundr ed million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a sma rt grid, automatize industry, achieve robotics, and control and adjust a drone.

5G is a means of providing streaming evaluated as a few hundred megabits per second to gigabits per second and m ay complement fiber-to-the-home (FTTH) and cable-based broadband (or DOCSIS). Such fast speed is needed to deliver TV i n resolution of 4K or more (6K, 8K, and more), as well as virtual reality and augmented reality. Virtual reality (VR) and augm ented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile comm unication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object i n the dark in addition to an object seen from a front window and displays a distance from the object and a movement of the ob ject by overlapping information talking to the driver. In the future, a wireless module enables communication between vehicle s, information exchange between a vehicle and supporting infrastructure, and information exchange between a vehicle and oth er connected devices (e.g., devices accompanied by a pedestrian). A safety system guides alternative courses of a behavior so that a driver may drive more safely drive, thereby lowering the danger of an accident. The next stage will be a remotely contr olled or self-driven vehicle. This requires very high reliability and very fast communication between different self-driven vehi cles and between a vehicle and infrastructure. In the future, a self-driven vehicle will perform all driving activities and a drive r will focus only upon abnormal traffic that the vehicle cannot identify. Technical requirements of a self-driven vehicle deman d ultra-low latency and ultra-high reliability so that traffic safety is increased to a level that cannot be achieved by human bein g.

A smart city and a smart home/building mentioned as a smart society will be embedded in a high-density wireless s ensor network. A distributed network of an intelligent sensor will identify conditions for costs and energy-efficient maintenan ce of a city or a home. Similar configurations may be performed for respective households. All of temperature sensors, windo w and heating controllers, burglar alarms, and home appliances are wirelessly connected. Many of these sensors are typically l ow in data transmission rate, power, and cost. However, real-time HD video may be demanded by a specific type of device to perform monitoring.

Consumption and distribution of energy including heat or gas is distributed at a higher level so that automated contr ol of the distribution sensor network is demanded. The smart grid collects information and connects the sensors to each other using digital information and communication technology so as to act according to the collected information. Since this inform ation may include behaviors of a supply company and a consumer, the smart grid may improve distribution of fuels such as el ectricity by a method having efficiency, reliability, economic feasibility, production sustainability, and automation. The smart grid may also be regarded as another sensor network having low latency.

Mission critical application (e.g., e-health) is one of 5G use scenarios. A health part contains many application prog rams capable of enjoying benefit of mobile communication. A communication system may support remote treatment that prov ides clinical treatment in a faraway place. Remote treatment may aid in reducing a barrier against distance and improve acces s to medical services that cannot be continuously available in a faraway rural area. Remote treatment is also used to perform i mportant treatment and save lives in an emergency situation. The wireless sensor network based on mobile communication m ay provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with re-constructible wireless links is a n attractive opportunity in many industrial fields. However, in order to achieve this replacement, it is necessary for wireless c onnection to be established with latency, reliability, and capacity similar to those of the cable and management of wireless co nnection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low dat a rate but require location information with a wide range and reliability.

Referring to FIG. 1, the communication system 1 includes wireless devices 100a to 100f, base stations (BSs) 200, a nd a network 300. Although FIG. 1 illustrates a 5G network as an example of the network of the communication system 1, the implementations of the present disclosure are not limited to the 5G system, and may be applied to the future communication s ystem beyond the 5G system.

The BSs 200 and the network 300 may be implemented as wireless devices and a specific wireless device may oper ate as a BS/network node with respect to other wireless devices.

The wireless devices 100a to 100f represent devices performing communication using radio access technology (RA T) (e.g., 5G new RAT (NR)) or LTE) and may be referred to as communication/radio/5G devices. The wireless devices 100a t o 100f may include, without being limited to, a robot 100a, vehicles 100b-1 and 100b-2, an extended reality (XR) device 100c , a hand-held device 100d, a home appliance 100e, an IoT device 100f, and an artificial intelligence (AI) device/server 400. F or example, the vehicles may include a vehicle having a wireless communication function, an autonomous driving vehicle, an d a vehicle capable of performing communication between vehicles. The vehicles may include an unmanned aerial vehicle (U AV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a w earable device, a home appliance device, a digital signage, a vehicle, a robot, etc. The hand-held device may include a smartp hone, a smartpad, a wearable device (e.g., a smartwatch or a smartglasses), and a computer (e.g., a notebook). The home appli ance may include a TV, a refrigerator, and a washing machine. The IoT device may include a sensor and a smartmeter.

In the present disclosure, the wireless devices 100a to 100f may be called user equipments (UEs). A UE may includ e, for example, a cellular phone, a smartphone, a laptop computer, a digital broadcast terminal, a personal digital assistant (PD A), a portable multimedia player (PMP), a navigation system, a slate personal computer (PC), a tablet PC, an ultrabook, a veh icle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device re lated to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging a n object or a background of the virtual world into an object or a background of the real world. The hologram device may inclu de, for example, a device for implementing a stereoscopic image of 360 degrees by recording and reproducing stereoscopic in formation, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, s martbulbs, door locks, or various sensors.

The medical device may be, for example, a device used for the purpose of diagnosing, treating, relieving, curing, or preventing disease. For example, the medical device may be a device used for the purpose of diagnosing, treating, relieving, o r correcting injury or impairment. For example, the medical device may be a device used for the purpose of inspecting, replac ing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safet y. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environ ment.

The wireless devices 100a to 100f may be connected to the network 300 via the BSs 200. An AI technology may be applied to the wireless devices 100a to 100f and the wireless devices 100a to 100f may be connected to the AI server 400 via t he network 300. The network 300 may be configured using a 3G network, a 4G (e.g., LTE) network, a 5G (e.g., NR) network, and a beyond-5G network. Although the wireless devices 100a to 100f may communicate with each other through the BSs 20 0/network 300, the wireless devices 100a to 100f may perform direct communication (e.g., sidelink communication) with eac h other without passing through the BSs 200/network 300. For example, the vehicles 100b-1 and 100b-2 may perform direct c ommunication (e.g., vehicle-to-vehicle (V2V)/vehicle-to-everything (V2X) communication). The IoT device (e.g., a sensor) m ay perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/c onnections may be established through various RATs (e.g., 5G NR) such as uplink/downlink communication 150a, sidelink c ommunication (or device-to-device (D2D) communication) 150b, inter-base station communication 150c (e.g., relay, integrat ed access and backhaul (IAB)), etc. The wireless devices 100a to 100f and the BSs 200/the wireless devices 100a to 100f may transmit/receive radio signals to/from each other through the wireless communication/connections 150a, 150b and 150c. For e xample, the wireless communication/connections 150a, 150b and 150c may transmit/receive signals through various physical channels. To this end, at least a part of various configuration information configuring processes, various signal processing pro cesses (e.g., channel encoding/decoding, modulation/demodulation, and resource mapping/de-mapping), and resource allocati ng processes, for transmitting/receiving radio signals, may be performed based on the various proposals of the present disclos ure.

AI refers to the field of studying artificial intelligence or the methodology that may create it, and machine learning r efers to the field of defining various problems addressed in the field of AI and the field of methodology to solve them. Machi ne learning is also defined as an algorithm that increases the performance of a task through steady experience on a task.

Robot means a machine that automatically processes or operates a given task by its own ability. In particular, robots with the ability to recognize the environment and make self-determination to perform actions may be called intelligent robots. Robots may be classified as industrial, medical, home, military, etc., depending on the purpose or area of use. The robot may perform a variety of physical operations, such as moving the robot joints with actuators or motors. The movable robot also inc ludes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in mot ion, automatically adjusting speed such as adaptive cruise control, automatic driving along a set route, and automatically setti ng a route when a destination is set. The vehicle covers vehicles equipped with internal combustion engines, hybrid vehicles e quipped with internal combustion engines and electric motors, and electric vehicles equipped with electric motors, and may in clude trains, motorcycles, etc., as well as cars. Autonomous vehicles may be seen as robots with autonomous driving function s.

Extended reality is collectively referred to as VR, AR, and MR. VR technology provides objects and backgrounds o f real world only through computer graphic (CG) images. AR technology provides a virtual CG image on top of a real object i mage. MR technology is a CG technology that combines and combines virtual objects into the real world. MR technology is s imilar to AR technology in that they show real and virtual objects together. However, there is a difference in that in AR techn ology, virtual objects are used as complementary forms to real objects, while in MR technology, virtual objects and real objec ts are used as equal personalities.

NR supports multiples numerologies (and/or multiple subcarrier spacings (SCS)) to support various 5G services. Fo r example, if SCS is 15 kHz, wide area may be supported in traditional cellular bands, and if SCS is 30 kHz/60 kHz, dense-ur ban, lower latency, and wider carrier bandwidth may be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", F R2 may mean "above 6 GHz range," and may be referred to as millimeter wave (mmW). FR2 may include FR 2-1 and FR 2-2 , as shown in the examples in Table 1 and Table 2.

[Table 1]

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, F R1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for e xample for communication for vehicles (e.g., autonomous driving).

[Table 2]

| Frequency Range designation | | Corresponding frequency range | Subcarrier Spacing |
|---|---|---|---|
| FR1 | | 410MHz - 7125MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may incl ude narrowband internet-of-things (NB-IoT) technology for low-power communication as well as LTE, NR and 6G. For exam ple, NB-IoT technology may be an example of low power wide area network (LPWAN) technology, may be implemented in s pecifications such as LTE Cat NB1 and/or LTE Cat NB2, and may not be limited to the above-mentioned names. Additionall y, and/or alternatively, the radio communication technologies implemented in the wireless devices in the present disclosure m ay communicate based on LTE-M technology. For example, LTE-M technology may be an example of LPWAN technology a nd be called by various names such as enhanced machine type communication (eMTC). For example, LTE-M technology ma y be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be li mited to the above-mentioned names. Additionally, and/or alternatively, the radio communication technologies implemented i n the wireless devices in the present disclosure may include at least one of ZigBee, Bluetooth, and/or LPWAN which take int o account low-power communication, and may not be limited to the above-mentioned names. For example, ZigBee technolog y may generate personal area networks (PANs) associated with small/low-power digital communication based on various spe cifications such as IEEE 802.15.4 and may be called various names.

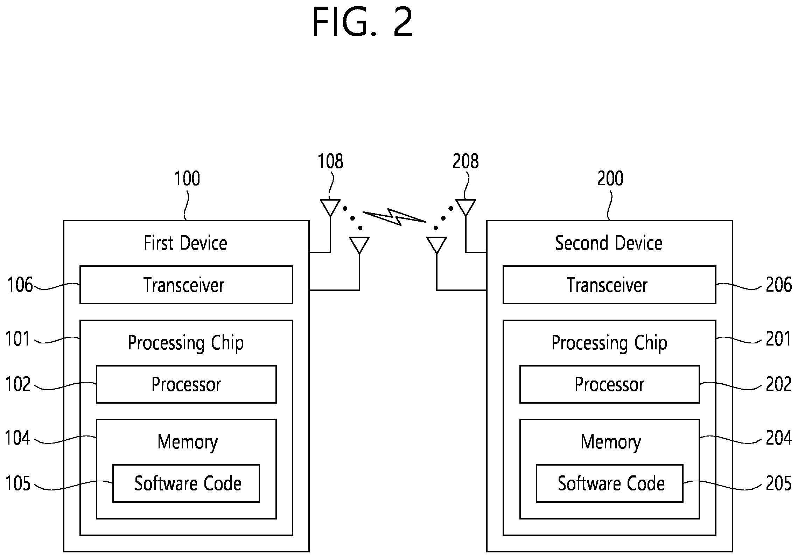

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/ or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. F or example, the processor 102 may process information within the memory 104 to generate first information/signals and then t ransmit radio signals including the first information/signals through the transceiver 106. The processor 102 may receive radio signals including second information/signals through the transceiver 106 and then store information obtained by processing th e second information/signals in the memory 104.

The memory 104 may be operably connectable to the processor 102. The memory 104 may store various types of in formation and/or instructions. The memory 104 may store a software code 105 which implements instructions that, when exec uted by the processor 102, perform the descriptions, functions, procedures, suggestions, methods and/or operational flowchart s disclosed in the present disclosure. For example, the software code 105 may implement instructions that, when executed by t he processor 102, perform the descriptions, functions, procedures, suggestions, methods and/or operational flowcharts disclos ed in the present disclosure. For example, the software code 105 may control the processor 102 to perform one or more protoc ols. For example, the software code 105 may control the processor 102 to perform one or more layers of the radio interface pr otocol.

Herein, the processor 102 and the memory 104 may be a part of a communication modem/circuit/chip designed to i mplement RAT (e.g., LTE or NR). The transceiver 106 may be connected to the processor 102 and transmit and/or receive ra dio signals through one or more antennas 108. Each of the transceiver 106 may include a transmitter and/or a receiver. The tra nsceiver 106 may be interchangeably used with radio frequency (RF) unit(s). In the present disclosure, the first wireless devic e 100 may represent a communication modem/circuit/chip.

The second wireless device 200 may include at least one transceiver, such as a transceiver 206, at least one processi ng chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/ or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. F or example, the processor 202 may process information within the memory 204 to generate third information/signals and then transmit radio signals including the third information/signals through the transceiver 206. The processor 202 may receive radi o signals including fourth information/signals through the transceiver 106 and then store information obtained by processing t he fourth information/signals in the memory 204.

The memory 204 may be operably connectable to the processor 202. The memory 204 may store various types of in formation and/or instructions. The memory 204 may store a software code 205 which implements instructions that, when exec uted by the processor 202, perform the descriptions, functions, procedures, suggestions, methods and/or operational flowchart s disclosed in the present disclosure. For example, the software code 205 may implement instructions that, when executed by t he processor 202, perform the descriptions, functions, procedures, suggestions, methods and/or operational flowcharts disclos ed in the present disclosure. For example, the software code 205 may control the processor 202 to perform one or more protoc ols. For example, the software code 205 may control the processor 202 to perform one or more layers of the radio interface pr otocol.

Herein, the processor 202 and the memory 204 may be a part of a communication modem/circuit/chip designed to i mplement RAT (e.g., LTE or NR). The transceiver 206 may be connected to the processor 202 and transmit and/or receive ra dio signals through one or more antennas 208. Each of the transceiver 206 may include a transmitter and/or a receiver. The tra nsceiver 206 may be interchangeably used with RF unit. In the present disclosure, the second wireless device 200 may represe nt a communication modem/circuit/chip.

Hereinafter, hardware elements of the wireless devices 100 and 200 will be described more specifically. One or mor e protocol layers may be implemented by, without being limited to, one or more processors 102 and 202. For example, the on e or more processors 102 and 202 may implement one or more layers (e.g., functional layers such as physical (PHY) layer, m edia access control (MAC) layer, radio link control (RLC) layer, packet data convergence protocol (PDCP) layer, radio resour ce control (RRC) layer, and service data adaptation protocol (SDAP) layer). The one or more processors 102 and 202 may ge nerate one or more protocol data units (PDUs) and/or one or more service data unit (SDUs) according to the descriptions, fun ctions, procedures, suggestions, methods and/or operational flowcharts disclosed in the present disclosure. The one or more pr ocessors 102 and 202 may generate messages, control information, data, or information according to the descriptions, functio ns, procedures, suggestions, methods and/or operational flowcharts disclosed in the present disclosure. The one or more proce ssors 102 and 202 may generate signals (e.g., baseband signals) including PDUs, SDUs, messages, control information, data, or information according to the descriptions, functions, procedures, suggestions, methods and/or operational flowcharts disclo sed in the present disclosure and provide the generated signals to the one or more transceivers 106 and 206. The one or more p rocessors 102 and 202 may receive the signals (e.g., baseband signals) from the one or more transceivers 106 and 206 and acq uire the PDUs, SDUs, messages, control information, data, or information according to the descriptions, functions, procedures , suggestions, methods and/or operational flowcharts disclosed in the present disclosure.

The one or more processors 102 and 202 may be referred to as controllers, microcontrollers, microprocessors, or mi crocomputers. The one or more processors 102 and 202 may be implemented by hardware, firmware, software, or a combinati on thereof. As an example, one or more application specific integrated circuits (ASICs), one or more digital signal processors (DSPs), one or more digital signal processing devices (DSPDs), or one or more programmable logic devices (PLDs), or one or m ore field programmable gate arrays (FPGAs) may be included in the one or more processors 102 and 202. The descriptions, fu nctions, procedures, suggestions, methods and/or operational flowcharts disclosed in the present disclosure may be implement ed using firmware or software and the firmware or software may be configured to include the modules, procedures, or functio ns. Firmware or software configured to perform the descriptions, functions, procedures, suggestions, methods and/or operatio nal flowcharts disclosed in the present disclosure may be included in the one or more processors 102 and 202 or stored in the one or more memories 104 and 204 so as to be driven by the one or more processors 102 and 202. The descriptions, functions , procedures, suggestions, methods and/or operational flowcharts disclosed in the present disclosure may be implemented usin g firmware or software in the form of code, commands, and/or a set of commands.

The one or more memories 104 and 204 may be connected to the one or more processors 102 and 202 and store vari ous types of data, signals, messages, information, programs, code, instructions, and/or commands. The one or more memories 104 and 204 may be configured by read-only memories (ROMs), random access memories (RAMs), electrically erasable prog rammable read-only memories (EPROMs), flash memories, hard drives, registers, cash memories, computer-readable storage media, and/or combinations thereof. The one or more memories 104 and 204 may be located at the interior and/or exterior of t he one or more processors 102 and 202. The one or more memories 104 and 204 may be connected to the one or more process ors 102 and 202 through various technologies such as wired or wireless connection.

The one or more transceivers 106 and 206 may transmit user data, control information, and/or radio signals/channel s, mentioned in the descriptions, functions, procedures, suggestions, methods and/or operational flowcharts disclosed in the pr esent disclosure, to one or more other devices. The one or more transceivers 106 and 206 may receive user data, control infor mation, and/or radio signals/channels, mentioned in the descriptions, functions, procedures, suggestions, methods and/or oper ational flowcharts disclosed in the present disclosure, from one or more other devices. For example, the one or more transceiv ers 106 and 206 may be connected to the one or more processors 102 and 202 and transmit and receive radio signals. For exa mple, the one or more processors 102 and 202 may perform control so that the one or more transceivers 106 and 206 may tran smit user data, control information, or radio signals to one or more other devices. The one or more processors 102 and 202 ma y perform control so that the one or more transceivers 106 and 206 may receive user data, control information, or radio signal s from one or more other devices.

The one or more transceivers 106 and 206 may be connected to the one or more antennas 108 and 208 and the one o r more transceivers 106 and 206 may be configured to transmit and receive user data, control information, and/or radio signals /channels, mentioned in the descriptions, functions, procedures, suggestions, methods and/or operational flowcharts disclosed in the present disclosure, through the one or more antennas 108 and 208. In the present disclosure, the one or more antennas 1 08 and 208 may be a plurality of physical antennas or a plurality of logical antennas (e.g., antenna ports).

The one or more transceivers 106 and 206 may convert received user data, control information, radio signals/channe ls, etc., from RF band signals into baseband signals in order to process received user data, control information, radio signals/c hannels, etc., using the one or more processors 102 and 202. The one or more transceivers 106 and 206 may convert the user d ata, control information, radio signals/channels, etc., processed using the one or more processors 102 and 202 from the base b and signals into the RF band signals. To this end, the one or more transceivers 106 and 206 may include (analog) oscillators a nd/or filters. For example, the one or more transceivers 106 and 206 can up-convert OFDM baseband signals to OFDM signal s by their (analog) oscillators and/or filters under the control of the one or more processors 102 and 202 and transmit the up-c onverted OFDM signals at the carrier frequency. The one or more transceivers 106 and 206 may receive OFDM signals at a c arrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device i n UL and as a transmitting device in DL. Hereinafter, for convenience of description, it is mainly assumed that the first wirele ss device 100 acts as the UE, and the second wireless device 200 acts as the BS. For example, the processor(s) 102 connected to, mounted on or launched in the first wireless device 100 may be configured to perform the UE behavior according to an im plementation of the present disclosure or control the transceiver(s) 106 to perform the UE behavior according to an implemen tation of the present disclosure. The processor(s) 202 connected to, mounted on or launched in the second wireless device 200 may be configured to perform the BS behavior according to an implementation of the present disclosure or control the transce iver(s) 206 to perform the BS behavior according to an implementation of the present disclosure.

In the present disclosure, a BS is also referred to as a node B (NB), an eNode B (eNB), or a gNB.

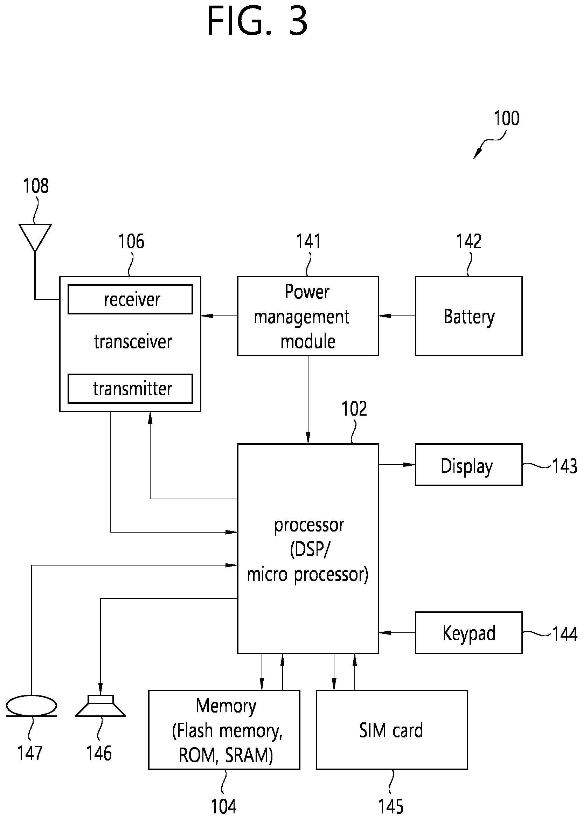

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 an d may be configured by various elements, components, units/portions, and/or modules. For example, each of the wireless devi ces 100 and 200 may include a communication unit 110, a control unit 120, a memory unit 130, and additional components 14 0. The communication unit 110 may include a communication circuit 112 and transceiver(s) 114. For example, the communic ation circuit 112 may include the one or more processors 102 and 202 of FIG. 2 and/or the one or more memories 104 and 20 4 of FIG. 2. For example, the transceiver(s) 114 may include the one or more transceivers 106 and 206 of FIG. 2 and/or the on e or more antennas 108 and 208 of FIG. 2. The control unit 120 is electrically connected to the communication unit 110, the m emory unit 130, and the additional components 140 and controls overall operation of each of the wireless devices 100 and 200 . For example, the control unit 120 may control an electric/mechanical operation of each of the wireless devices 100 and 200 b ased on programs/code/commands/information stored in the memory unit 130. The control unit 120 may transmit the informa tion stored in the memory unit 130 to the exterior (e.g., other communication devices) via the communication unit 110 throug h a wireless/wired interface or store, in the memory unit 130, information received through the wireless/wired interface from t he exterior (e.g., other communication devices) via the communication unit 110.

The additional components 140 may be variously configured according to types of the wireless devices 100 and 200 . For example, the additional components 140 may include at least one of a power unit/battery, input/output (I/O) unit (e.g., au dio I/O port, video I/O port), a driving unit, and a computing unit. The wireless devices 100 and 200 may be implemented in t he form of, without being limited to, the robot (100a of FIG. 1), the vehicles (100b-1 and 100b-2 of FIG. 1), the XR device (1 00c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (o r a finance device), a security device, a climate/environment device, the AI server/device (400 of FIG. 1), the BSs (200 of FIG . 1), a network node, etc. The wireless devices 100 and 200 may be used in a mobile or fixed place according to a use-exampl e/service.

In FIG. 3, the entirety of the various elements, components, units/portions, and/or modules in the wireless devices 1 00 and 200 may be connected to each other through a wired interface or at least a part thereof may be wirelessly connected thr ough the communication unit 110. For example, in each of the wireless devices 100 and 200, the control unit 120 and the com munication unit 110 may be connected by wire and the control unit 120 and first units (e.g., 130 and 140) may be wirelessly c onnected through the communication unit 110. Each element, component, unit/portion, and/or module within the wireless dev ices 100 and 200 may further include one or more elements. For example, the control unit 120 may be configured by a set of o ne or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memo ry, a non-volatile memory, and/or a combination thereof.

<Operating bands of NR>.

The operating bands in NR are as follows

The operating bands in Table 3 below are the refarmed operating bands from the operating bands of LTE/LTE-A. T his is referred to as the FR1 band.

[Table 3]

| NR operating bands | Uplink (UL) operating band | Downlink(DL) operating band | Duplex Mode |
|---|---|---|---|
| | $F_{UL\_low}$ - $F_{UL\_high}$ | $F_{DL\_low}$ - $F_{DL\_high}$ | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

[Table 4]

| NR Operating band | Uplink (UL) operating band | Downlink(DL) operating band | Duplex Mode |
|---|---|---|---|
| | $F_{UL\_low}$ - $F_{UL\_high}$ | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

<6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table 5]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

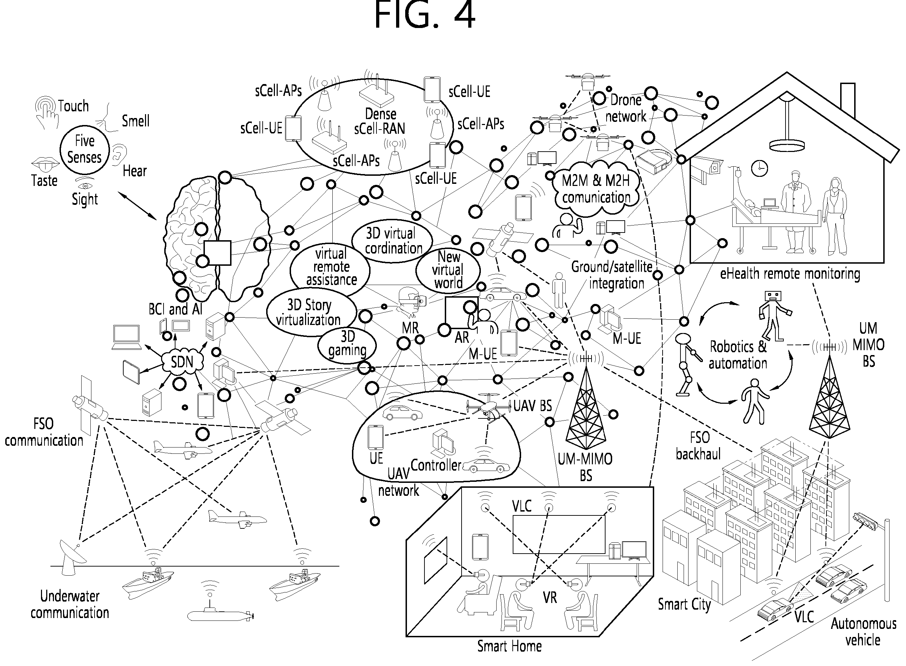

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (W IET) will be integrated.

- Ubiquitous super 3-dimemtion connectivity: Access to networks and core network functions of drones and very lo w earth orbit satellites will establish super 3D connection in 6G ubiquitous.

In the new network characteristics of 6G, several general requirements may be as follows.

- Small cell networks: The idea of a small cell network was introduced in order to improve received signal quality a s a result of throughput, energy efficiency and spectrum efficiency improvement in a cellular system. As a result, the small ce 11 network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic o f the 6G communication system. A multi-tier network composed of heterogeneous networks improves overall QoS and reduce s costs.
- High-capacity backhaul: Backhaul connection is characterized by a high-capacity backhaul network in order to sup port high-capacity traffic. A high-speed optical fiber and free space optical (FSO) system may be a possible solution for this p roblem.
- Radar technology integrated with mobile technology: High-precision localization (or location-based service) throu gh communication is one of the functions of the 6G wireless communication system. Accordingly, the radar system will be in tegrated with the 6G network.
- Softwarization and virtualization: Softwarization and virtualization are two important functions which are the base s of a design process in a 5GB network in order to ensure flexibility, reconfigurability and programmability.

**<Core implementation technology of 6G system>**

Artificial Intelligence

Technology which is most important in the 6G system and will be newly introduced is AI. AI was not involved in th e 4G system. A 5G system will support partial or very limited AI. However, the 6G system will support AI for full automatio n. Advance in machine learning will create a more intelligent network for real-time communication in 6G. When AI is introdu ced to communication, real-time data transmission may be simplified and improved. AI may determine a method of performin g complicated target tasks using countless analysis. That is, AI may increase efficiency and reduce processing delay.

Time-consuming tasks such as handover, network selection or resource scheduling may be immediately performed b y using AI. AI may play an important role even in M2M, machine-to-human and human-to-machine communication. In additi on, AI may be rapid communication in a brain computer interface (BCI). An AI based communication system may be support ed by meta materials, intelligent structures, intelligent networks, intelligent devices, intelligent recognition radios, self-mainta ining wireless networks and machine learning.

Recently, attempts have been made to integrate AI with a wireless communication system in the application layer or the network layer, but deep learning have been focused on the wireless resource management and allocation field. However, s uch studies are gradually developed to the MAC layer and the physical layer, and, particularly, attempts to combine deep lear ning in the physical layer with wireless transmission are emerging. AI-based physical layer transmission means applying a sig nal processing and communication mechanism based on an AI driver rather than a traditional communication framework in a fundamental signal processing and communication mechanism. For example, channel coding and decoding based on deep lear ning, signal estimation and detection based on deep learning, multiple input multiple output (MIMO) mechanisms based on d eep learning, resource scheduling and allocation based on AI, etc. may be included.

Machine learning may be used for channel estimation and channel tracking and may be used for power allocation, in terference cancellation, etc. in the physical layer of DL. In addition, machine learning may be used for antenna selection, pow er control, symbol detection, etc. in the MIMO system.

Machine learning refers to a series of operations to train a machine in order to create a machine which can perform t asks which cannot be performed or are difficult to be performed by people. Machine learning requires data and learning mode ls. In machine learning, data learning methods may be roughly divided into three methods, that is, supervised learning, unsupe rvised learning and reinforcement learning.

Neural network learning is to minimize output error. Neural network learning refers to a process of repeatedly input ting training data to a neural network, calculating the error of the output and target of the neural network for the training data, backpropagating the error of the neural network from the output layer of the neural network to an input layer in order to reduc e the error and updating the weight of each node of the neural network.

Supervised learning may use training data labeled with a correct answer and the unsupervised learning may use train ing data which is not labeled with a correct answer. That is, for example, in case of supervised learning for data classification, training data may be labeled with a category. The labeled training data may be input to the neural network, and the output (cat egory) of the neural network may be compared with the label of the training data, thereby calculating the error. The calculated error is backpropagated from the neural network backward (that is, from the output layer to the input layer), and the connectio n weight of each node of each layer of the neural network may be updated according to backpropagation. Change in updated c onnection weight of each node may be determined according to the learning rate. Calculation of the neural network for input d ata and backpropagation of the error may configure a learning cycle (epoch). The learning data is differently applicable accor ding to the number of repetitions of the learning cycle of the neural network. For example, in the early phase of learning of th e neural network, a high learning rate may be used to increase efficiency such that the neural network rapidly ensures a certai n level of performance and, in the late phase of learning, a low learning rate may be used to increase accuracy.

The learning method may vary according to the feature of data. For example, for the purpose of accurately predictin g data transmitted from a transmitter in a receiver in a communication system, learning may be performed using supervised le arning rather than unsupervised learning or reinforcement learning.

The learning model corresponds to the human brain and may be regarded as the most basic linear model. However, a paradigm of machine learning using a neural network structure having high complexity, such as artificial neural networks, a s a learning model is referred to as deep learning

Neural network cores used as a learning method may roughly include a deep neural network (DNN) method, a conv olutional deep neural network (CNN) method, a recurrent Boltzmman machine (RNN) method and a spiking neural network ( SNN). Such a learning model is applicable.

THz (Terahertz) Communication

A data rate may increase by increasing bandwidth. This may be performed by using sub-TH communication with wi de bandwidth and applying advanced massive MIMO technology. THz waves which are known as sub-millimeter radiation, g enerally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communic ation. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical ba nd but is at the border of the optical band and is just behind an RF band. Accordingly, the band of 300 GHz to 3 THz has simi larity with RF.

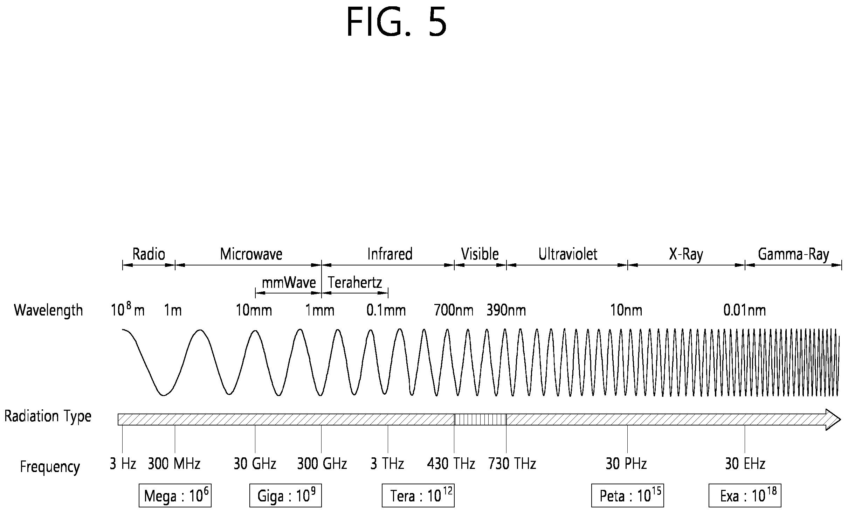

FIG. 5 shows an example of an electromagnetic spectrum.

The main characteristics of THz communication include (i) bandwidth widely available to support a very high data r ate and (ii) high path loss occurring at a high frequency (a high directional antenna is indispensable). A narrow beam width ge nerated in the high directional antenna reduces interference. The small wavelength of a THz signal allows a larger number of antenna elements to be integrated with a device and BS operating in this band. Therefore, an advanced adaptive arrangement t echnology capable of overcoming a range limitation may be used.

Large-scale MIMO

One of core technologies for improving spectrum efficiency is MIMO technology. When MIMO technology is impr oved, spectrum efficiency is also improved. Accordingly, massive MIMO technology will be important in the 6G system. Sin ce MIMO technology uses multiple paths, multiplexing technology and beam generation and management technology suitabl e for the THz band should be significantly considered such that data signals are transmitted through one or more paths.

Hologram Beamforming

Beamforming is a signal processing procedure that adjusts an antenna array to transmit radio signals in a specific dir ection. This is a subset of smart antennas or advanced antenna systems. Beamforming technology has several advantages, suc h as high signal-to-noise ratio, interference prevention and rejection, and high network efficiency. Hologram Beamforming (H BF) is a new beamforming method that differs significantly from MIMO systems because this uses a software-defined antenn a. HBF will be a very effective approach for efficient and flexible transmission and reception of signals in multi-antenna com munication devices in 6G.

Optical wireless technology

Optical wireless communication (OWC) is a form of optical communication that uses visible light, infrared light (IR ), or ultraviolet light (UV) to carry signals. OWC operating in the visible light band (e.g., 390 to 750 nm) is commonly referre d to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/-unlicensed an d can provide extensive bandwidth (THz-level bandwidth). Second, VLC rarely causes significant interference to other electro magnetic devices, therefore, VLC can be applied in sensitive electromagnetic interference applications such as aircraft and ho spitals. Third, VLC has strengths in communication security and privacy. The transmission medium of VLC-based networks, namely visible light, cannot pass through walls and other opaque obstacles. Therefore, the transmission range of VLC can be l imited to indoors, which can protect users' privacy and sensitive information. Fourth, VLC can use any light source as a base s tation, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). L aser transmitters may be used in FSO implementations, and FSO can provide high data rates (e.g., 10 Gbit/s), providing a pote ntial solution to backhaul bottlenecks.

These OWC technologies are planned for 6G communications in addition to RF-based communications for all possi ble device-to-access networks. These networks will access network-to-backhaul/fronthaul network connections. OWC techno logy has already been in use since 4G communication systems, but will be more widely used to meet the needs of 6G commu nication systems. OWC technologies such as light fidelity, visible light communication, optical camera communication, and F SO communication based on optical bands are already well-known technologies. Communication based on optical wireless te chnology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully a utomated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a goo d technology for providing backhaul connection in the 6G system along with the optical fiber network. When FSO is used, ve ry long-distance communication is possible even at a distance of 10,000 km or more. FSO supports mass backhaul connection s for remote and non-remote areas such as sea, space, underwater and isolated islands. FSO also supports cellular base station connections.

Non-Terrestrial Networks (NTN)

The 6G system will integrate terrestrial and aerial networks to support vertically expanding user communications. 3 D BS will be delivered via low-orbit satellites and UAVs. Adding a new dimension in terms of altitude and associated degree s of freedom makes 3D connectivity quite different from traditional 2D networks. NR considers Non-Terrestrial Networks (N TNs) as one way to accomplish this. An NTN is a network or network segment that uses RF resources aboard a satellite (or U AS platform). There are two common scenarios for NTNs that provide access to user equipment: transparent payloads and reg enerative payloads. The following are the basic elements of an NTN.

- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensu res service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the o nboard antenna diagram and the minimum angle of attack.

- Transparent payload: Radio frequency filtering, frequency conversion, and amplification, so the waveform signal r epeated by the payload is unchanged.
- Regenerative payload: radio frequency filtering, frequency conversion and amplification, demodulation/decryption , switching and/or routing, and coding/modulation. This is effectively the same as having all or part of the base station functio ns (e.g., gNB) on board a satellite (or UAS platform).
- For satellite deployments, optionally an inter-satellite link (ISL). This requires a regenerative payload on the satell ite. ISLs can operate at RF frequencies or in the optical band.
- User equipment is served by satellites (or UAS platforms) within the targeted coverage area.

Typically, GEO satellites and UAS are used to provide continental, regional, or local services.

Typically, constellations in LEO and MEO are used to provide coverage in both the Northern and Southern Hemisp heres. In some cases, constellations can also provide global coverage, including polar regions. The latter requires proper orbit al inclination, sufficient beams generated, and links between satellites.

Quantum Communication

Quantum communication is a next-generation communication technology that can overcome the limitations of conv entional communication such as security and high-speed computation by applying quantum mechanical properties to the field of information and communication. Quantum communication provides a means of generating, transmitting, processing, and st oring information that cannot be expressed in the form of 0s and 1s according to the binary bit information used in existing co mmunication technologies. In conventional communication technologies, wavelengths or amplitudes are used to transmit info rmation between the transmitting and receiving ends, but in quantum communication, photons, the smallest unit of light, are u sed to transmit information between the transmitting and receiving ends. In particular, in the case of quantum communication, quantum uncertainty and quantum irreversibility can be used for the polarization or phase difference of photons (light), so qua ntum communication has the characteristic of being able to communicate with perfect security. In addition, quantum commun ication can also enable ultra-high-speed communication using quantum entanglement under certain conditions.

Cell-free Communication

Tight integration of multiple frequencies and heterogeneous communication technologies is critical in 6G systems. As a result, users can seamlessly move from one network to another without having to create any manual configurations on th eir devices. The best network is automatically selected from the available communication technologies. This will break the li mitations of the cell concept in wireless communication. Currently, user movement from one cell to other causes too many ha ndovers in dense networks, resulting in handover failures, handover delays, data loss, and ping-pong effects. 6G cell-free com munication will overcome all this and provide better QoS.

Cell-free communication is defined as "a system in which a large number of geographically distributed antennas (A Ps) cooperatively serve a small number of terminals using the same time/frequency resources with the help of a fronthaul net work and a CPU". A single terminal is served by a set of multiple APs, which is called an AP cluster. There are several ways t o form AP clusters, among which the method of configuring AP clusters with APs that can significantly contribute to improvi ng the reception performance of the terminal is called the terminal-centered clustering method, and when using this method, t he configuration is dynamically updated as the terminal moves. By adopting this device-centric AP clustering technique, the d evice is always at the center of the AP cluster and is therefore free from inter-cluster interference that can occur when the devi ce is located at the boundary of the AP cluster. This cell-free communication will be achieved through multi-connectivity and multi-tier hybrid technologies and different heterogeneous radios in the device.

Integration of Wireless Information and Energy Transfer (WIET)

WIET uses the same field and wave as a wireless communication system. In particular, a sensor and a smartphone w ill be charged using wireless power transfer during communication. WIET is a promising technology for extending the life of battery charging wireless systems. Therefore, devices without batteries will be supported in 6G communication.

Integration of Wireless Communication and Sensing

An autonomous wireless network is a function for continuously detecting a dynamically changing environment state and exchanging information between different nodes. In 6G, sensing will be tightly integrated with communication to support autonomous systems.

## Integrated Access and Backhaul Network

In 6G, the density of access networks will be enormous. Each access network is connected by optical fiber and back haul connection such as FSO network. To cope with a very large number of access networks, there will be a tight integration b etween the access and backhaul networks.

## Big Data Analysis

Big data analysis is a complex process for analyzing various large data sets or big data. This process finds informati on such as hidden data, unknown correlations, and customer disposition to ensure complete data management. Big data is coll ected from various sources such as video, social networks, images and sensors. This technology is widely used for processing massive data in the 6G system.

## Reconfigurable Intelligent Surface

There is a large body of research that considers the radio environment as a variable to be optimized along with the tr ansmitter and receiver. The radio environment created by this approach is referred to as a Smart Radio Environment (SRE) or Intelligent Radio Environment (IRE) to highlight its fundamental differences from past design and optimization criteria. Vario us terms have been proposed for the reconfigurable intelligent antenna (or intelligent reconfigurable antenna technology) tech nology that enables SRE, including Reconfigurable Metasurfaces, Smart Large Intelligent Surfaces (SLIS), Large Intelligent S urfaces (LIS), Reconfigurable Intelligent Surface (RIS), and Intelligent Reflecting Surface (IRS).
In the case of THz band signals, there are many shadowed areas caused by obstacles due to the strong straightness o f the signal, and RIS technology is important to expand the communication area by installing RIS near these shadowed areas, strengthening communication stability and enabling additional value-added services. RIS is an artificial surface made of elect romagnetic materials that can alter the propagation of incoming and outgoing radio waves. While RIS can be seen as an exten sion of massive MIMO, it has a different array structure and operating mechanism than massive MIMO. RIS also has the adva ntage of lower power consumption because it operates as a reconfigurable reflector with passive elements, meaning it only pa ssively reflects the signal without using an active RF chain. In addition, each of the passive reflectors in the RIS must indepen dently adjust the phase shift of the incident signal, which can be advantageous for wireless communication channels. By prop erly adjusting the phase shift through the RIS controller, the reflected signal can be gathered at the target receiver to boost the received signal power.
In addition to reflecting radio signals, there are also RISs that can adjust transmission and refraction properties, and these RISs are mainly used for O2I (Outdoor to Indoor). Recently, STAR-RIS (Simultaneous Transmission and Reflection RI S), which provides transmission while reflecting, has also been actively researched.

## Metaverse

Metaverse is a portmanteau of the words "meta" meaning virtual, transcendent, and "universe" meaning space. Gene rally speaking, the metaverse is a three-dimensional virtual space where the same social and economic activities as in the real world are commonplace.
Extended Reality (XR), a key technology enabling the Metaverse, is the fusion of the virtual and the real, which can extend the experience of reality and provide a unique sense of immersion. The high bandwidth and low latency of 6G network s will enable users to experience more immersive virtual reality (VR) and augmented reality (AR) experiences.

## Autonomous Driving, Self-driving

For perfect autonomous driving, vehicles must communicate with each other to inform each other of dangerous situ ations, or with infrastructure such as parking lots and traffic lights to check information such as the location of parking inform ation and signal change times. Vehicle-to-Everything (V2X), a key element in building an autonomous driving infrastructure, is a technology that enables vehicles to communicate and share information with various elements on the road, such as vehicl e-to-vehicle (V2V) and vehicle-to-infrastructure (V2I), for autonomous driving.
In order to maximize the performance of autonomous driving and ensure high safety, fast transmission speeds and l ow latency technologies are essential. In addition, in the future, autonomous driving will go beyond delivering warnings and g uidance messages to the driver to actively intervene in vehicle operation and directly control the vehicle in dangerous situatio ns, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cas es, a high-speed data wireless connection is provided using UAV technology. A base station entity is installed in the UAV to provide cellular connectivity. UAVs have certain features, which are not found in fixed base station infrastructures, such as ea sy deployment, strong line-of-sight links, and mobility-controlled degrees of freedom. During emergencies such as natural dis asters, the deployment of terrestrial telecommunications infrastructure is not economically feasible and sometimes services ca nnot be provided in volatile environments. The UAV can easily handle this situation. The UAV will be a new paradigm in the field of wireless communications. This technology facilitates the three basic requirements of wireless networks, such as eMB B, URLLC and mMTC. The UAV can also serve a number of purposes, such as network connectivity improvement, fire detec tion, disaster emergency services, security and surveillance, pollution monitoring, parking monitoring, and accident monitorin g. Therefore, UAV technology is recognized as one of the most important technologies for 6G communication.

Block-chain

A blockchain will be important technology for managing large amounts of data in future communication systems. T he blockchain is a form of distributed ledger technology, and distributed ledger is a database distributed across numerous nod es or computing devices. Each node duplicates and stores the same copy of the ledger. The blockchain is managed through a p eer-to-peer (P2P) network. This may exist without being managed by a centralized institution or server. Blockchain data is col lected together and organized into blocks. The blocks are connected to each other and protected using encryption. The blockc hain completely complements large-scale IoT through improved interoperability, security, privacy, stability and scalability. A ccordingly, the blockchain technology provides several functions such as interoperability between devices, high-capacity data traceability, autonomous interaction of different IoT systems, and large-scale connection stability of 6G communication syste ms.

<Carrier Aggregation>

The Carrier Aggregation system is now described.
A carrier aggregation system aggregates multiple element carriers (CCs). Depending on the carrier aggregation, the meaning of the existing cells changes. Depending on the carrier aggregation, a cell may refer to a combination of downlink el ement carriers and uplink element carriers, or to independent downlink element carriers.
Furthermore, in carrier aggregation, cells can be classified as primary cells, secondary cells, and serving cells. A pri mary cell is a cell operating on a primary frequency. A primary cell means a cell to which a terminal performs an initial conne ction establishment procedure or a connection re-establishment procedure, or a cell that is directed as a primary cell in a hand over procedure. Secondary cell means a cell operating on a secondary frequency. When an RRC connection is established, the secondary cell is used to provide additional radio resources.
As described above, a carrier aggregation system may support multiple component carriers (CCs), i.e., multiple serv ing cells, as opposed to a single carrier system.
The carrier aggregation system may support cross-carrier scheduling. Cross-carrier scheduling is a scheduling meth od that allows PDCCH transmitted over a particular CC to perform resource allocation of PDSCH transmitted over other CCs and/or resource allocation of PUSCH transmitted over CCs different from those natively associated with the particular CC.
Carrier Aggregation can also be classified into Inter-Band CA and Intra-band CA. Inter-band CA is a method of agg regating CCs that exist in different operating bands, while intra-band CA is a method of aggregating CCs in the same operatin g band. More specifically, CA techniques include intra-band contiguous CA, intra-band non-contiguous CA, and inter-band n on-contiguous CA.

**<Dual Connectivity (DC)>**

Recently, a scheme for simultaneously connecting UE to different base stations, for example, a macro cell base stati on and a small cell base station, is being studied. This is called dual connectivity (DC).
For example, when DC is configured in E-UTRA, the following exemplary description may be applied.
In DC, the eNodeB for the primary cell (PCell) may be referred to as a master eNodeB (hereinafter referred to as M eNB). In addition, the eNodeB only for the secondary cell (Scell) may be referred to as a secondary eNodeB (hereinafter refe rred to as SeNB).
A cell group including a primary cell (PCell) implemented by MeNB may be referred to as a master cell group (MC G) or PUCCH cell group 1. A cell group including a secondary cell (Scell) implemented by the SeNB may be referred to as a secondary cell group (SCG) or PUCCH cell group 2.

Meanwhile, among the secondary cells in the secondary cell group (SCG), a secondary cell in which the UE can transmit Uplink Control Information (UCI), or the secondary cell in which the UE can transmit a PUCCH may be referred to as a super secondary cell (Super SCell) or a primary secondary cell (Primary Scell; PScell).

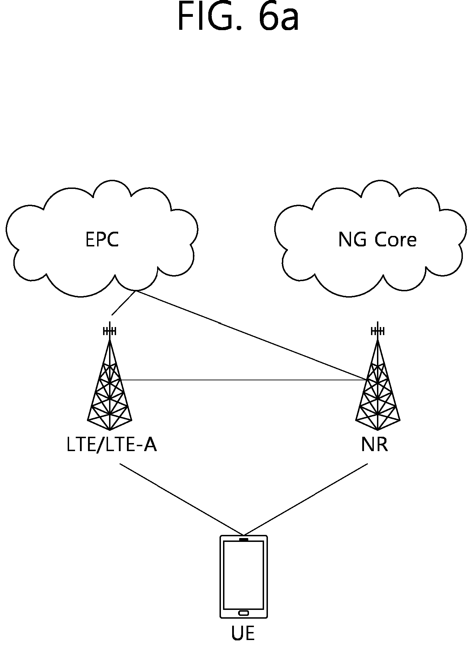

FIGS. 6a to 6c are diagrams illustrating exemplary architecture for a next-generation mobile communication service

Referring to FIG. 6a, a UE is connected in dual connectivity (DC) with an LTE/LTE-A cell and a NR cell.

The NR cell is connected with a core network for the legacy fourth-generation mobile communication, that is, an Evolved Packet core (EPC). In example shown in FIG. 6a, the UE is configured with EN-DC(E-UTRA-NR DC). The UE, which is configured with EN-DC, is connected with an E-UTRA (that is, LTE/LTE-A) cell and an NR cell. Here, a PCell in EN-DC may be an E-UTRA (that is, LTE/LTE-A) cell, and a PSCell in EN-DC may be an NR cell.

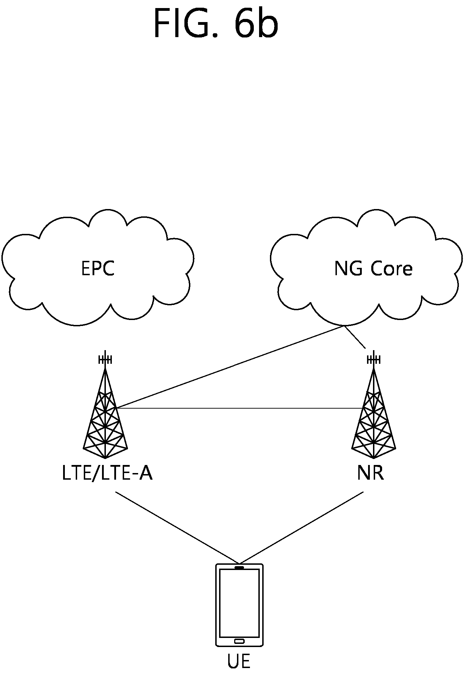

Referring to FIG. 6b, the LTE/LTE-A cell is connected with a core network for 5th generation mobile communication, that is, a Next Generation (NG) core network, unlike the example in FIG. 6a.

A service based on the architecture shown in FIGS. 4a and 4b is referred to as a non-standalone (NSA) service.

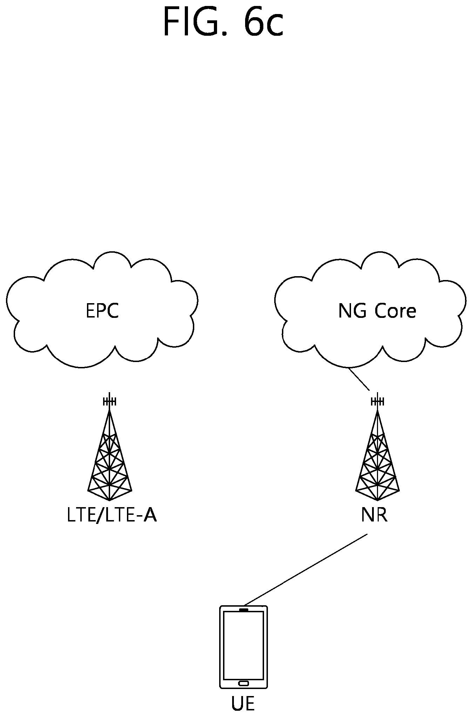

Referring to FIG. 6c, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to paired spectrums and not-paired spectrums. A pair of spectrum indicates including two subcarrier for downlink and uplink operations. For example, one subcarrier in one pair of spectrum may include a pair of a downlink band and an uplink band.

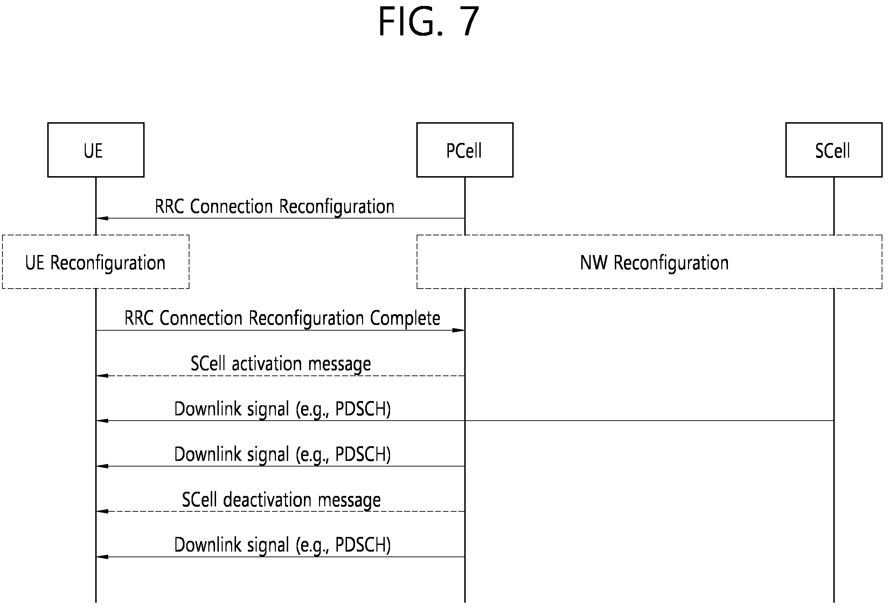

FIG. 7 illustrates one example of a procedure for activating a SCell.

In the example of FIG. 7, a UE, a PCell, and a SCell are shown. The PCell and SCell are shown as separate objects, but may be included within a single base station or device. Alternatively, the PCell and SCell may exist in different locations.

The PCell may send an RRC connection reset message to the UE.

Optionally, the UE may perform a reconfiguration procedure. Optionally, the PCell and SCell may perform a Network (NW) reconfiguration procedure.

The UE may send a RRC connection reconfiguration complete message to the PCell.

The PCell may send a SCell activation message to the UE.

The UE may perform cell detection procedures for the SCell. And the UE may perform measurements for the SCell. An connection between the UE and the SCell may be established.

The UE may receive downlink signal from PCell and SCell.

If the PCell wants to deactivate the SCell, the PCell may send a SCell deactivation message.

Then, the UE may not receive any downlink signal from the SCell. The UE may receive downlink signal from the PCell.

In the following, the measurements based on various examples will be explained. For example, measurements to quickly perform SCell setup/resume and/or SCG setup/resume when RRC connection setup is performed, will be described.

It was discussed to support fast DC/CA setup when the device transitions from idle/inactive mode to connected mode. For fast DC/CA setup, it is being discussed to support Early measurement report (EMR) on the device. However, there is a problem that it is impossible to perform fast DC/CA setup for devices that do not support EMR.

Note that UE and terminal are used interchangeably in the following.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

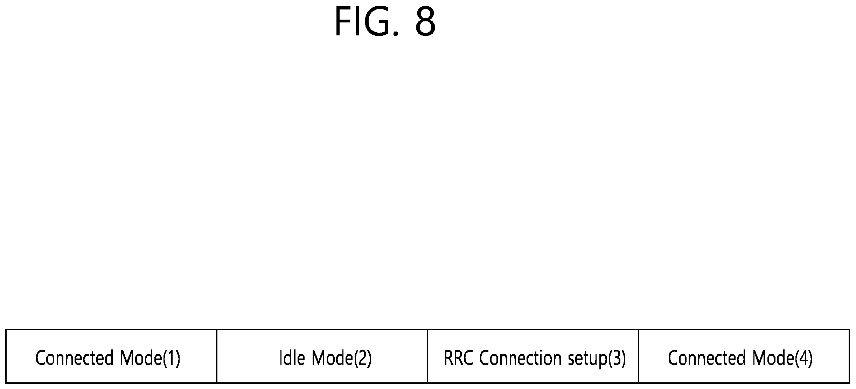

FIG. 8 illustrates an example UE state, according to one embodiment of the present disclosure.

Referring to the example in FIG. 8, the states of the UE include Connected Mode, Idle Mode, RRC Connection setup, and Connected Mode. The state of the UE illustrated in the example of FIG. 8 may be a state related to Radio Resource Control (RRC).

For the mobility enhancement of 5G NR, a solution is needed to perform DC configuration and/or CA configuration quickly when the UE transitions from idle/inactive mode (i.e., idle mode or inactive mode) to the connected mode. For example, when a terminal (e.g., UE) transitions from idle/inactive mode to connected mode, the need for a new measurement method for SCell/SCG setup and additional NW information for fast DC/CA setup can be discussed.

Here, the measurement for SCell/SCG setup performed for fast DC/CA setup refers to the measurement performed in the step of setting up/resuming "(3) RRC connection" in the example of FIG. 8.

An operation called Early measurement report (EMR) exists to allow the device to quickly set up DC/CA. EMR is a lso referred to as Idle/inactive mode measurement. According to the conventional EMR operation, the UE receives the inform ation to be measured in idle mode (or inactive mode) in the connected mode (part (1) of Figure 8). Then, the UE starts the me asurement in idle mode (or inactive) and reports the measurement results in connected mode (part (4) of Figure 8). Note that t he EMR measurement may be set by the network. For example, the network may send an RRC Release message to the UE inc luding setup information for EMR measurement. For example, an EMR measure may be represented by idleInactiveNR-Meas Report. If the terminal supports idleInactiveNR-MeasReport, the terminal shall be able to perform the idle/inactive mode CA/ DC measurement set via RRC release until the T331 timer expires. However, some terminals do not have the EMR capability to perform these EMR measurements.

For devices without EMR capability, it is also necessary to find a way to quickly set up DC/CA. For this purpose, a n enhancement of the measurement method can be considered. Here, a terminal without EMR capability may mean a terminal that is not capable of performing EMR. This specification proposes the operations of the NW and the terminal for the measure ment of the terminal in the orange part while the operation related to the RRC Connection setup (e.g., (3) of FIG. 8) is perfor med. In the examples in this specification, a terminal without EMR capability is assumed. However, this is for illustrative pur poses only, and the description of the terminals in the various examples of this specification may also apply to terminals with EMR capability. In addition, the operations of the UE described below may apply to all terminals, or may apply only to termi nals with enhanced measurement (e.g., examples of the nomenclature of the measurements described in the opening examples of this specification) capabilities. Each of the operations described below may be used in combination.

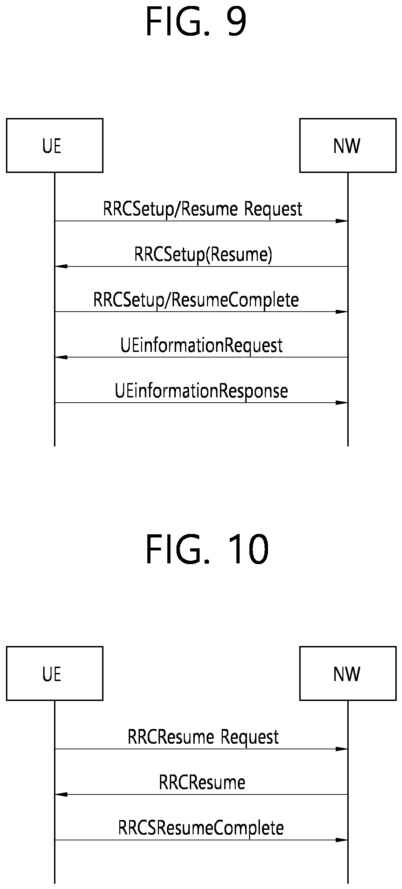

The RRC connection setup resume step of the terminal can be described in two parts, as shown in the example of FI G. 9 and the example of FIG. 10. Various examples of the present disclosure will be described with reference to the example o f FIG. 9 and the example of FIG. 10.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 9 illustrates an example of a procedure related to RRC Setup/Resume, according to one embodiment of the present disclosure.**

In the example of FIG. 9, the NW may refer to a base station (e.g., gNB, NG-RAN).

The UE may send an RRCSetup request message or an RRC Resume request message.

The NW may send an RRC Setup (Resume) message.

When the UE receives the RRC Setup (Resume) message, the UE may send the RRC Setup/Resume Complete mess age.

The NW may send a UEinformationRequest.

The UE may send UEinformationResponse.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 10 illustrates an example of a procedure related to RRC Resume, according to one embodiment of the p resent disclosure.**

The UE may send an RRC Resume request message.

The NW may send an RRCResume message.

When the UE receives the RRC Resume message, the UE may send an RRC Resume Complete message.

Referring to the example in FIG. 9 and the example in FIG. 10, 1) measurement information configuration, 2) meas urement gaps setup, 3) measurement period and measurement samples/beams, and 4) measurement reporting will be describe d.

1) Measurement information configuration

The measurement information may be configured, for example, in the Setup request step (e.g., step (3) in FIG. 8) or in the Idle/inactive mode (e.g., step (2) in FIG. 8).

1-A) The measurement information may be set in the setup request step.

For example, the terminal may request a configuration for measurement in the setup request step. For example, the t erminal may request the measurement configuration as shown in the example below:

i) the terminal may request the measurement configuration in an RRCsetup/resume request (e.g., the first step of FI G. 8 or the first step of FIG. 9); or

ii) the terminal may request the measurement configuration in an RRCsetup/resume complete (third step of FIG. 8).

The NW may transmit measurement configuration to all terminals, or if the terminals request the configuration to th e terminals, or to the terminals depending on the capabilities of the terminals. Note that in the present disclosure, the terminal may send capability information to the NW. For example, the NW may send a UEcapabilityEnquiry message to the terminal. Upon receiving the UEcapabilityEnquiry message from the network, the terminal may transmit the capability related to the E MR to the network.

For example, the NW may, based on the capability of the terminal, perform operations such as the following examp les:

i) the NW may transmit the measurement configuration to the terminal in RRCsetup/resume (the second step of FIG . 8 or the second step of FIG. 9); or

ii) the NW may transmit the measurement configuration to the terminal in a UEinformationRequest (fourth step of F IG. 8).

1-B) Measurement information can be configured in idle/inactive mode.

For example, the terminal may receive measurement configuration in idle/inactive mode. For example, the terminal may perform the following example operations:

i) The terminal may use the measurement configuration defined in SIB4 or SIB11;

ii) based on a separate SIB, the measurement configuration may only be applied to terminals with enhanced measur ement capability;

iii) the NW may notify the device of the measurement configuration in advance when the device transitions from co nnected mode to idle mode;

iv) based on the measurement information for inter-frequency cell reselection in idle mode, the terminal may be info rmed of the measurement information; or

v) in the case of an EMR terminal, the terminal may use the information included in the EMR measurement configu ration.

The device may receive a paging, causing the device's state to be in connected mode. In this case, the device may re ad the paging information, or it may receive the measurement configuration in a separate process.

2) measurement gap configuration (or setup)

2-A) The NW may set the measurement gap (MG) to the terminal through a separate signalling. In this case, MG set ting may be performed similarly to "1) Setting measurement information" described above;

2-B) Alternatively, there may be no MG setting and the terminal determines that MG is required. In this case, the ter minal may set the MG on its own to ensure that the transmission/reception associated with the RRC connection is not interrup ted; or

2-C) The terminal may prioritise the procedure until the RRC connection complete message is sent. After that, the te rminal may perform the measurement of the measurement cell quickly without using MG after RF tuning to the measurement cell.

3) Measurement interval (or duration or period) and measurement sample/beam

3-A) Measurement start time

For the measurement start time, the following examples may apply:

a) The terminal may start measuring from the time it receives the measurement configuration (e.g., during the confi guration step described in "1) Setting up measurement information"); or

b) the terminal may start measurement at the stage of sending an RRC resume request.

In addition, a Timer (e.g., T300) may be started at the moment the measurement starts. For example, a value such as {100, 200, 300, 400, 600, 1000, 1500, 2000} ms may be used as the Timer value.

3-B) Measurement method

The terminal and/or NW may perform actions related to measurement based on the following examples:

i) Even if the terminal is capable of transmitting RRC setup/resume complete messages, it may defer the transmissio n of RRC setup/resume complete in order to perform a quick measurement on the segment. In addition, the following exampl es may apply:

i-1) For these measurements, the end time of the timer may be considered. Examples based on i-2 and i-3 below ma y be considered;

i-2) (if MG is absent) The timer started above may need to have at least (SMTC cycles * beam sweeping factor * nu mber of measurement samples) left to end, in order for the terminal to defer transmission; and

i-3) (if MG is present) In order for the terminal to defer transmission, the end time of the timer that has started must be at least (max(MGRP,SMTC cycle) * beam sweeping factor * number of measurement samples) remaining.

The cell measured by the terminal may be an unknown cell. In this case, additional time to detect the PBCH may be considered. The difference between the measurement time for a known cell and the measurement time for an unknown cell ca n be expressed in the following example:

$$T_{identify\_inter\_without\_index} = (T_{PSS/SSS\_sync\_inter} + T_{SSB\_measurement\_period\_inter})\ ms$$

$$T_{identify\_inter\_with\_index} = (T_{PSS/SSS\_sync\_inter} + T_{SSB\_measurement\_period\_inter} + T_{SSB\_time\_index\_inter})\ ms$$

In the above formula, $T_{identify\_inter\_without\_index}$ is an example of measurement time for a known cell, and $T_{identify\_inter\_with\_index}$ is an example of measurement time for an unknown cell. For a detailed description of the parameters in the above formu la, please refer to 3GPP TS 38.133 V17.7.0 S9.3.4.

For example, in the above formula, TPSS/SSS_sync_inter, TSSB_time_index_inter, and T SSB_measurement_peri od_inter can be based on Table 6, Table 7, and Table 8, respectively.

[Table 6]

| Condition (NOTE 1, 2 applied) | $T_{PSS/SSS\_sync\_inter}$ |
|---|---|
| No DRX | Max(600ms, Ceil($K_{gap}$ * $M_{pss/sss\_sync\_inter}$ x $K_{FR}$) * Max(MGRP, SMTC period)) * CSSF$_{inter}$ |
| DRX cycle $\leq$320ms | Max(600ms, Ceil(1.5 * $K_{gap}$ * $M_{pss/sss\_sync\_inter}$ x $K_{FR}$) * Max(MGRP, SMTC period, DRX cycle)) * CSSFinter |
| DRX cycle > 320ms | Ceil($K_{gap}$ * $M_{pss/sss\_sync\_inter}$ x $K_{FR}$) * DRX cycle * CSSF$_{inter}$ |

The example in Table 6 is an example of a time period for PSS/SSS detection in FR2. For the examples in Table 6, NOTE 1 to NOTE 4 below may apply:

NOTE 1: DRX requirements or non DRX requirements shall be applied according to the conditions described in cla use 3.6.1 of 3GPP TS 38.133.

NOTE 2: In EN-DC operation, the parameters, timers and scheduling requests referred to in clause 3.6.1 of 3GPP T S 38.133 are for the secondary cell group. DRX cycle is the DRX cycle of the secondary cell group.

NOTE 3: For UEs supporting concurrent gaps, if concurrent measurement gaps are configured, the MRGP above is the MRGP of the measurement gap associated with the target frequency layer to be measured.

NOTE 4: KFR is a scaling factor that depends on the frequency range and SSB SCS. For FR2-1, KFR = 1. For FR2-2: KFR = 1 if the SCS of the SSB of the cell being detected is 120 kHz, KFR = 2 if the SCS of the SSB of the cell being detec ted is 480 kHz, and KFR = 3 if the SCS of the SSB of the cell being detected is 960 kHz.

[Table 7]

| Condition (NOTE 1, 2 applied) | $T_{SSB\_time\_index\_inter}$ |
|---|---|
| No DRX | $Max(200ms, Ceil(K_{gap} * M_{SSB\_index\ inter}) * Max(MGRP, SMTC\ period)) * CSSF_{inter}$ |
| DRX cycle $\leq$320ms | $Max(200ms, Ceil(1.5 * K_{gap} * M_{SSB\_index\_inter}) * Max(MGRP, SMTC\ period, DRX\ cycle)) * CSSF_{inter}$ |
| DRX cycle > 320ms | $Ceil(K_{gap} * M_{SSB\_index\_inter}) * DRX\ cycle * CSSF_{inter}$ |

The example in Table 7 is an example of a time period for time index detection in FR2. For the examples in Table 7 , NOTE 1 to NOTE 3 below may apply:

NOTE 1: DRX requirements or non DRX requirements shall be applied according to the conditions described in cla use 3.6.1 of 3GPP TS 38.133.
NOTE 2: In EN-DC operation, the parameters, timers and scheduling requests referred to in clause 3.6.1 of 3GPP T S 38.133 are for the secondary cell group. DRX cycle is the DRX cycle of the secondary cell group.
NOTE 3: For UEs supporting concurrent gaps, if a concurrent measurement gap is set, the MRGP above is the MRG P of the measurement gap associated with the target frequency layer to be measured.

[Table 8]

| Condition (NOTE 1, 2 applied) | $T_{SSB\_measurement\_period\_inter}$ |
|---|---|
| No DRX | $Max(400ms, Ceil(K_{gap} * M_{meas\_period\_inter}) * Max(MGRP, SMTC\ period)) * CSSF_{in-ter}$ |
| DRX cycle $\leq$320ms | $Max(400ms, Ceil(1.5 * K_{gap} * M_{meas\_period\_inter}) * Max(MGRP, SMTC\ period, DRX\ cycle)) * CSSF_{inter}$ |
| DRX cycle > 320ms | $Ceil(K_{gap} * M_{meas\_period\_inter}) * DRX\ cycle * CSSF_{inter}$ |

The example in Table 8 is an example of the Measurement period for inter-frequency measurements with gaps in F R2.
Time period for time index detection. For the examples in Table 8, NOTE 1 through NOTE 3 below may apply:

NOTE 1: DRX requirements or non DRX requirements may be applied according to the conditions described in cla use 3.6.1 of 3GPP TS 38.133.
NOTE 2: In EN-DC operation, the parameters, timers and scheduling requests referred to in clause 3.6.1 of 3GPP T S 38.133 are for the secondary cell group. DRX cycle is the DRX cycle of the secondary cell group.
NOTE 3: For UEs supporting concurrent gaps, if a concurrent measurement gap is set, the MRGP above is the MRG P of the measurement gap associated with the target frequency layer to be measured.

For reference, if MG is not required in the above table, only the SMTC period can be considered. In addition, in the above measurement, relatively fast measurements such as highSpeedMeasInterFreq-r17 can be considered.
For example, if a quick measurement is considered, a quick measurement may be considered relatively according to the set Timer value. For reference, the timer here may refer to the timer described in '3-A)' above. For example, if Timer is se t to 600 or more, a normal measurement may be considered, and if Timer is set to a value less than 600, a quick measurement may be considered.
ii) Even if the measurement has not been completed, the terminal may stop the measurement and send RRC setup/re sume complete. In this case, the terminal may inform the NW that the measurement has not been completed. For example, the terminal may report to the NW that the measurement has not been completed via RRC setup/resume complete. For example, i f the NW requests the measurement result from the terminal, the terminal may report that it has not completed the measureme nt. Also, after the terminal transitions to the Connected mode, the measurement of the NW's Scell and its related configuration may be similar or identical. In this case, the terminal may also resume the measurement from the point at which it stopped. Fo r example, the target of a measurement previously performed by the terminal and the configuration related to the target may b e similar to the SCell of the NW and the configuration related to the SCell after the terminal has transitioned to the connected mode. In this case, the terminal may resume the measurement from the point at which it stopped.

Further, the terminal may consider whether the MG is required and the remaining time on the timer before performi ng the measurement. For example, before performing the measurement, the terminal may abandon the measurement or perfor m the measurement based on whether the MG is required and the remaining time of the timer. For example, if the terminal co nsiders the MG and the timer and determines that the measurement is not possible before the timer expires, the terminal may a bandon the measurement. When abandoning or performing a measurement, the terminal may report the abandonment or proce eding with the measurement to the NW.

iii) For measurements, the remaining time of the Timer may not be considered. In this case, the terminal should term inate all measurements just before the Timer expires and send RRC setup/resume complete. In this case (when the remaining t ime of the Timer is not considered), only relatively fast measurements, such as highSpeedMeasInterFreq-r17 in the above exa mple, can be considered. highSpeedMeasInterFreq-r17 may be a measurement for a terminal that moves at high speed. For ex ample, highSpeedMeasInterFreq-r17 may also be referred to as highSpeedMeasFlagFR2. When the terminal receives the high SpeedMeasFlagFR2, it can apply the enhanced RRM requirements supported at high speeds of about 350 km/h. For example, when the highSpeedMeasFlagFR2 is configured, the terminal may perform measurements based on a small number of sample s, as shown in the example in Table 11 below. This shortens the measurement/evaluation time, allowing the terminal to perfor m fast measurements.

Also, in this case, after the terminal has transitioned to the Connected mode, the measurement of the NW's Scell and configuration related to the Scell may be similar or identical. In this case, the terminal may resume the measurement from the point at which the measurement was stopped. For example, the target of a measurement previously performed by the terminal and the configuration related to this target may be similar to the SCell of the NW and the configuration related to it after the te rminal has transitioned to the connected mode. In this case, the terminal can resume the measurement from the point at which it stopped.

iv) For the measurements performed by the terminal, the following examples of methods may be further considered

iv-1) For measurements performed by the terminal, fewer samples and a smaller beam sweeping factor may be appli ed compared to conventional measurements. The terminal may perform measurements based on a smaller sample and smaller beam sweeping factor than conventional measurements:

iv-1-A) Here, the sample and beam sweeping factor may be reduced in the following example. For example, the bea m sweeping factor can be reduced based on the measurement in the inter frequency measurement in idle mode. For example, t he inter frequency measurement result may be derived by combining the measurement sample measured in the idle mode with the measurement sample measured in the connected mode;
iv-1-B) or, depending on the capability of the terminal, a small beam sweeping factor may be applied.

iv-2) The terminal and/or NW may use the measurement results as follows:

iv-2-A) The measurement results may be used to select a cell for a fast DC/CA setup,
iv-2-B) The measurement results may be used to obtain a candidate cell list of cells for a DC/CA setup, or
iv-2-C) The measurement results may be used to verify the cell for DC/CA setup.

v) If the measurement is performed in idle mode, for example, a small number of samples and a different scaling fac tor than that used in the connected mode may be used. For example, as shown in the examples in Table 9 to Table 11 below, t he sample and beam sweeping may be considered.

[Table 9]

| DRX cycle length [s] | Scaling Factor (N1) | | | $T_{detect,NR\_Inter}$ [s] (number of DRX cycles) | $T_{measure,NR\_Inter}$ [s] (number of DRX cycles) | $T_{evaluate,NR\_Inter}$ [s] (number of DRX cycles) |
|---|---|---|---|---|---|---|
| | FR1 | FR2-1 (NOTE 1 applied) | FR2-2(NOTE 2 applied) | | | |
| 0.32 | 1 | 8 | 12 | 11.52 x N1 x 1.5 (36 x N1 x 1.5) | 1.28 x N1 x 1.5 (4 x N1 x 1.5) | 5.12 x N1 x 1.5 (16 x N1 x 1.5) |
| 0.64 | | 5 | 8 | 17.92x N1 (28 x N1) | 1.28 xN1 (2 x N1) | 5.12 x N1 (8 x N1) |
| 1.28 | | 4 | 6 | 32 x N1 (25 x N1) | 1.28 x N1 (1 x N1) | 6.4 x N1 (5 x N1) |
| 2.56 | | 3 | 5 | 58.88 x N1 (23 x N1) | 2.56 x N1 (1 x N1) | 7.68 x N1 (3 x N1) |

The examples in Table 9 show examples of $T_{detect, NR\_}Inter$, $T_{measure, NR\_}Inter$ and $T_{evaluate, NR\_Inter}$.

NOTE 9 can be applied as in the following example:

Note 1: Applies to UE supporting FR2-1 power classes 2, 3, and 4. For UE supporting FR2-1 power class 1 or 5, N1 = 8 for all DRX cycle lengths.

Note 2: Applies to UE supporting FR2-2 power class 2&3. For UE supporting FR2-2 power class 1, N1 = 12 for all DRX cycle lengths.

In the table above, requirement is an example of the number of samples and duration in a typical measurement. Therefore, a smaller sample, for example 36, 4, 16 (based on a DRX with a 0.32s period) can be used. Or, a smaller scaling factor, for example 8, 5, 4, 3, can be used.

For example, the following sample and beam sweeping factor for highspeedmes case may be used.

[Table 10]

| DRX cycle length [s] | $T_{detect,NR\_Intra}$ [s] (number of DRX cycles) | $T_{measure,NR\_Intra}$ [s] (number of DRX cycles) | $T_{evaluate,NR\_Intra}$ [s] (number of DRX cycles) |
|---|---|---|---|
| 0.32 | 2.56 x M2 (8 x M2) | 0.32 x M3 (1 x M3) | 0.96 x M4 (3 x M4) |
| 0.64 | 5.12 (8) | 0.64 (1) | 1.92 (3) |
| 1.28 | 8.96 (7) | 1.28 (1) | 3.84 (3) |
| 2.56 | 58.88 (23) | 2.56 (1) | 7.68 (3) |

The example in Table 10 shows examples of $T_{detect, NR\_Intra}$, $T_{measure, NR\_Intra}$, and $T_{evaluate, NR\_Intra}$ for the case of a UE being configured with highSpeedMeasFlag-r16 in FR1.

The following NOTE can be applied to the example in Table 10.

Note 1: If SMTC is 40 ms or less, M2 = M3 = M4 = 1. And if SMTC is more than 40 ms, M2 = 1.5, M3 = M4 = 2.

Note 2: If highSpeedMeasFlag-r16 is configured, the requirement can only be applied to UEs supporting measurementEnhancement-r16 or intraNR-MeasurementEnhancement-r16.

[Table 11]

| DRX cycle length [s] | Scaling Factor (N1) | $T_{detect,NR\_Intra}$ [s] (number of DRX cycles) | $T_{measure,NR\_Intra}$ [s] (number of DRX cycles) | $T_{evaluate,NR\_Intra}$ [s] (number of DRX cycles) |
|---|---|---|---|---|
| 0.32 | N2 (NOTE 2 applied) | 2.56 x N1 x M2 (8 x N1 x M2) | 0.32 x N1 x M3 (1 x N1 x M3) | 0.96 x N1 x M4 (3 x N1 x M4) |
| 0.64 | 5 | 17.92 x N1 (28 x N1) | 1.28 x N1 (2 x N1) | 5.12 x N1 (8 x N1) |
| 1.28 | 4 | 32 x N1 (25 x N1) | 1.28 x N1 (1 x N1) | 6.4 x N1 (5 x N1) |
| 2.56 | 3 | 58.88 x N1 (23 x N1) | 2.56 x N1 (1 x N1) | 7.68 x N1 (3 x N1) |

The example in Table 11 shows an example of $T_{detect, NR\_Intra}$, $T_{measure, NR\_Intra}$ and $T_{evaluate, NR\_Intra}$ for a UE configured with highSpeedMeasFlag-r17 in FR2.

For the examples in table 11, the following notes may apply

Note 1: If the SMTC is 40 ms or less, M2 = M3 = M4 = 1. Then, if the SMTC is greater than 40 ms, M2 = 1.5, M3 = M4 = 2.

NOTE 2: If [highSpeedMeasFlagFR2-r17] = [set1], N2 = 2, and if [highSpeedMeasFlagFR2-r17] = [set2], N2 = 6.

4) Measurement Reporting

The terminal and/or the NW may perform operations related to the reporting of measurement results, as illustrated in the following examples:

4-A) The terminal may report the measurement results to the NW in RRCsetup/resume complete (third step of FIG. 9 or third step of FIG. 10);

4-B) the terminal may report the measurement results to the NW in UE information response (fifth step of FIG. 9);

4-C) the terminal may perform a separate procedure to report the measurement results to the NW, if the NW has requested the reporting of the measurement results. Alternatively, the terminal may perform a separate procedure for reporting th e measurement results; or

4-D) Alternatively, the terminal may defer (or postpone) reporting. The terminal may also report to the NW the combined results of the previously performed measurements and the sample measurements performed during the connection state. In this case, the terminal may inform the network that the measurement performed during the RRC connection state is include d.

The point at which the terminal ends the measurement may be when the end of the measurement is specified accord ing to "3) Measurement interval and sample/beam", or when the terminal has completed the reporting associated with the mea surement.

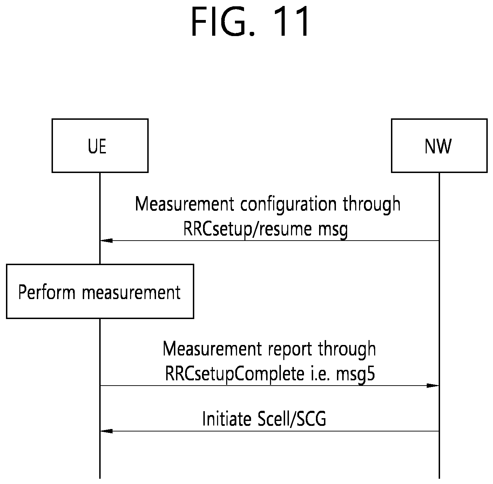

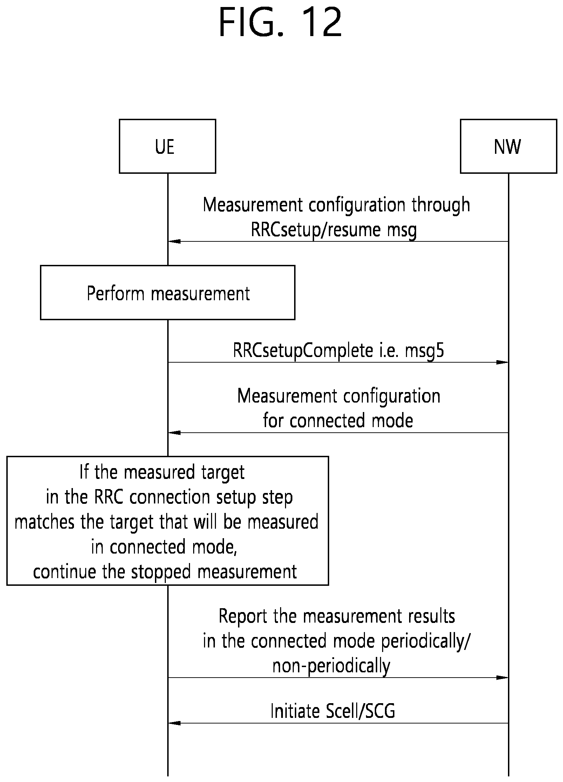

Combinations of operations comprising one or more of the operations described in the various examples of 1) to 4) a bove may be described, based on the example of FIG. 11 and the example of FIG. 12. The example of FIG. 11 and the examp le of FIG. 12 below are examples of operations of the NW and/or operations of the terminal based on the various examples de scribed above.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 11 illustrates a first example of operations related to measurement, according to one embodiment of the present disclosure.**

The example in Figure 11 is an example of when a terminal can report a measurement. For example, the example of FIG. 11 may be performed if the terminal, while performing the RRC connection setup procedure, acquires a measurement fa ult that is reportable(or to be reporteD) to the NW.

The NW may send an RRC setup message or an RRC resume message to the UE. The RRC setup message or RRC r esume message may include measurement configuration.

Based on the measurement configuration, the UE may start the measurement. The UE may determine that a reportab le result has been obtained during the RRC connection setup. Of note, in various examples of the disclosure herein, the UE m ay determine that a reportable result has been obtained, or decide to report a measurement, in any of the following examples. For example, a) the UE obtains a measurement result for which the measurement has been completed for the number of sampl es required to satisfy the measurement accuracy; or b) the UE obtains a measurement result for which the measurement was m ade within a certain time period from the time of reporting; or c) the UE obtains a measurement result for which the RSRP/RS RQ at the time the UE performs the measurement is above a certain value. b) may refer to a case where the measured result is within a certain time period relative to the time of reporting the measured result, for example, to prevent reporting of outdated measured results. For example, 'a certain time period' between the time of measurement and the time of reporting in b) may m ean the amount of time (x msec) between the time when the device performs the measurement and obtains the result and the ti me when the device reports the result of the measurement. If a large amount of time has elapsed since the measurement result was obtained, the measurement result may not be valid. Therefore, in case b), the UE determines that the measurement result i s valid within a certain time (x msec) from the time of reporting the measurement and considers it to be a reportable result.

For example, after the UE receives the RRC setup message, but before sending the RRC setup complete message, th e UE may determine that it has obtained reportable measurement results. In this case, the UE may send a measurement report to the NW via the RRCsetupComplete message.

The UE may transmit an RRCsetupComplete message to the NW including the measurement report. For example, t he RRCsetupComplete message may be msg5.

The NW may initiate a Scell/SCG. For example, the NW may provide the UE with configurations related to the Sce ll/SCG. For example, based on the measurements reported by the UE, the NW may perform procedures related to adding/acti vating the SCell/SCG (e.g., SCell addition and SCell activation). For example, the NW may send settings to the terminal to ad d/activate the SCell/SCG (e.g., SCell addition and SCell activation). For example, the procedure for setting up an SCell may be performed as illustrated in the example of FIG. 7.

Unlike the example of FIG. 11, if the terminal does not obtain reportable measurement results during the RRC conn ection setup, the operation according to the example of FIG. 12 may be performed.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 12 illustrates a second example in which operations related to measuring are performed, according to o ne embodiment of the present disclosure.**

The NW may send an RRC setup message or an RRC resume message to the UE. The RRC setup message or RRC r esume message may include measurement configuration.

Based on the measurement configuration, the UE may start the measurement. The UE may determine that it has not obtained a reportable result during the RRC connection setup. For example, in FIG. 12, the UE makes this determination, exc ept in the example of FIG. 11, where the UE determines that it has obtained a reportable result, or decides to report the measu rement. For example, after the UE receives the RRC setup message, but before it sends the RRC setup complete message, it m ay determine that it has not obtained a reportable measurement result. In this case, the UE may abort the measurement, i.e., th e UE may not send a measurement report.

The UE may transmit the RRCsetupComplete message to the NW. For example, the RRCsetupComplete message m ay be msg5.

The NW may transmit the UE measurement configuration related to the measurement to be performed in connected mode to the UE.

The UE may continue the interrupted (or stopped) measurement if the target (e.g., cell, frequency, etc.) measured in the RRC connection setup phase matches the target (e.g., cell, frequency, etc.) to be measured in the connected mode.

The UE may report to the NW the results of the measurements performed in connected mode on a cyclic or aperiodi c basis. For example, if the UE continues an interrupted measurement, it may report to the NW the measurement results taken during the RRC connection setup phase together with the measurement results taken in connected mode.

The NW may initiate a Scell/SCG. For example, the NW may provide settings related to the Scell/SCG to the UE. F or example, based on the measurements reported by the terminal, the NW may perform procedures related to adding/activatin g the SCell/SCG (e.g., SCell addition and SCell activation). For example, the NW may transmit configuration to add/activate a SCell/SCG (e.g., SCell addition and SCell activation) to the UE.

In the previous examples in FIG. 11 and FIG. 12, the operations of the UE and the operations of the NW were descr ibed in terms of the case where the terminal is able to report measurements and the case where the terminal is not able to repo rt measurements. Note that this distinction is for illustrative purposes only, and the operations of the UE and the operations of the NW can also be summarized as follows.

1. the NW may provide the terminal with clear measurement information for the measurement during the RRC perio d .
2. The terminal may start the measurement.
3. If the terminal has something to report, the terminal may report the measurement results when it sends RRCsetup complete.
4. if the device has nothing to report, the device may assume that the results it measured during RRCsetup were for an insufficient number of samples. In this case, the device can enter connected mode for the insufficient samples and continue measuring This process is described in more detail as follows

    A) the terminal may receive measurement information/Measure object from the NW when the terminal entering con nected mode; and
    B) the cell/frequency included in the measurement information may match the cell/frequency measured during RRC setup. In this case, the terminal may continue to perform measurements only for that cell/frequency.

5. the NW may initiate the Scell/SCG setup.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

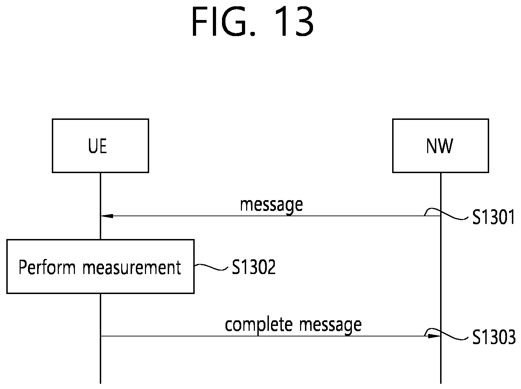

**FIG. 13 illustrates an example of an operation according to one embodiment** of the **present disclosure.**

Note that the operations of the UE and gNB illustrated in the example of Figure 13 is illustrative only. The operatio ns of the UE, gNB is not limited by the example of FIG. 13. The UE, gNB may perform any of the UE (or terminal) operation s and/or NW (or base station or gNB) operations previously described in various examples herein.

Before step S1301 is performed, the UE may transmit a request message to the gNB. For example, the request mess age may be an RRC setup request message or an RRC resume request message.

In step S1301, the gNB may transmit a message to the UE. The message may be a response message to the UE's req uest message. The message transmitted by the gNB may include first measurement information for an enhanced measurement . For example, enhanced measurements may refer to measurement operations described in various examples of the disclosure. For example, the enhanced measurement may be a measurement performed when the UE is in an idle state or an inactive state , prior to sending an RRC setup complete message or an RRC resume complete message.

In step S1302, the UE may perform the measurement. The UE may be in the idle state or the inactive state. The UE may perform the measurement based on the first measurement information.

In step S1303, the UE may transmit a complete message to the base station. The complete message may be, for exa mple, an RRC setup complete message or an RRC resume complete message.

The UE may include the measurement results in the complete message if, as a result of performing the measurement in step S1302, there are measurement results to report. If there are no measurement results to report, the UE may not include measurement results in the complete message. After sending the complete message, the UE may enter the connected state.

Based on that the complete message includes the results of the above measurements, the gNB may initiate the proce dure for establishing the SCell and/or the SCG.

The gNB may also transmit to the UE a second measurement information comprising information on the same targe t frequency as the target frequency for the first measurement performed. For example, the UE may receive the second measur ement information from the gNB if the complete message does not include the results of the measurement. If the UE interrupt s the measurement while performing the measurement in step S1302 (e.g., if there are no reportable measurement results), the UE may perform measurements based on the second measurement information for the remainder of the measurement period o f the measurement. The UE may send the measurement results based on the first measurement and the measurement results ba sed on the second measurement to the gNB.

For example, the NW (e.g., gNB) may provide explicit measurement information to the UE for enhanced measurem ents. If the NW wishes to make enhanced measurements, the NW may trigger the enhanced measurements. For example, the measurement may start when the UE sends msg1 to the NW. Msg1 may be a message that the UE sends to the network to init iate random access. After sending msg1, the UE may start further measurements. If the UE has measurement results to report, the UE may report the measurement results to the NW. For example, the UE may send msg5 including the measurement resul ts to the NW. The NW may then initiate SCell setup and/or SCG setup.

If the UE does not report the measurement results, the NW may expect the UE to continue to perform the measurem ent for the remainder of the measurement period. This may be the case if the UE has not included the measurement results in msg5. Conversely, the UE may send an msg5 message to the NW including the measurement results. Note that Msg1 may ref er to the preamble transmission from the UE to the NW. Msg2 may be a random access response transmitted by the NW to th e UE. Msg3 may be a Scheduled transmission from the UE to the NW. Msg4 may be a contention resolution sent by the NW t o the UE. The NW may set a target frequency in the measurement information that is the same as the target frequency of the m easurement that was performed while the UE was idle or inactive. For example, the NW may set the target frequency in the M easurement Object (MO) for the RRC Connected state. After the UE reports the improved measurement results, the NW may i nitiate SCell setup and/or SCG setup.

The UE may also send capability information to the gNB that the UE does not support early measurement report (E MR) measurements. If the gNB receives this capability information, the gNB may transmit the first measurement information to the UE.

In various examples of the disclosure, examples of a measurement configuration may be described. Examples of me asurement intervals and measurement samples may be described. Examples of measurement reporting points and operations f or performing measurement reporting may be described.

The present disclosure can have a variety of effects.

For example, fast DC setup and/or CA setup may be supported. For example, quick setup of Scell on NR might be s upported. For example, for devices that do not support EMR, a quick DC/CA setup can be performed.

The effects that may be obtained from the specific examples of this disclosure are not limited to those listed above. For example, there may be a variety of technical effects that a person having ordinary skill in the related art may understand o r infer from this disclosure. Accordingly, the specific effects of the present disclosure are not limited to those expressly set for th herein, but may include a variety of effects that may be understood or inferred from the technical features of the present dis closure.

For reference, the operation of the terminal (e.g., UE) described in the present specification may be implemented by the apparatus of FIGS. 1 to 4 described above. For example, the terminal(e.g., UE) may be the first device 100 or the second d evice 200 of FIG. 2. For example, an operation of a terminal(e.g., UE) of the present disclosure may be processed by one or m ore processors 102 or 202 . The operation of the terminal of the present disclosure may be stored in one or more memories 10 4 or 204 in the form of an instruction/program (e.g., instruction, executable code) executable by one or more processors 102 o r 202 . One or more processors 102 or 202 control one or more memories 104 or 204 and one or more transceivers 105 or 206 , and may perform the operation of the terminal of the present disclosure by executing instructions/programs stored in one or more memories 104 or 204.

In addition, instructions for performing an operation of a terminal described in the present disclosure of the present s pecification may be stored in a non-volatile computer-readable storage medium in which it is recorded. The storage medium m ay be included in one or more memories 104 or 204 . And, the instructions recorded in the storage medium may be executed b y one or more processors 102 or 202 to perform the operation of the terminal (e.g., UE) described in the present disclosure of the present specification.

For reference, the operation of a network node or base station (e.g., NG-RAN, gNB, NW, PCell, SCell, etc.) of the p resent disclosure may be implemented by the apparatus of FIGS. 1 to 3 to be described below. For example, a network

node or a base station may be the first device 100 of FIG.2 or the second device 200 of FIG.2. For example, the operation of a network node or base station of the present disclosure may be processed by one or more processors 102 or 202. The operation of the terminal of the present disclosure may be stored in one or more memories 104 or 204 in the form of an instruction/program (e.g., instruction, executable code) executable by one or more processors 102 or 202. One or more processors 102 or 202 may perform the operation of a network node or a base station of the present disclosure, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims of the present disclosure may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

**Claims**

1. A method for performing communication, the method performed by a user equipment (UE) and comprising:

   transmitting a request message to a base station,
   wherein the request message is a Radio Resource Control (RRC) setup request message or an RRC resume request message;
   receiving a response message to the request message from the base station,
   wherein the response message is an RRC setup message or an RRC resume message, and
   wherein the response message includes first measurement information for enhanced measurement,
   performing a first measurement, based on that the UE is in an idle state or inactive state, and the first measurement information is received; and
   transmitting a complete message to the base station,
   wherein the complete message is an RRC setup complete message or an RRC resumption complete message, and
   based on whether measurement report to be reported exists or not before the complete message being transmitted, the complete message includes or does not include the measurement result.

2. The method of claim 1,
   based on that the complete message includes the measurement result, a Secondary Cell (SCell) setup and/or Secondary Cell Group (SCG) setup is initiated by the base station.

3. The method of claim 1, further comprising:
   receiving second measurement information including information related to a target frequency that is the same as a target frequency for the first measurement.

4. The method of claim 3,
   wherein the second measurement information is received, based on that the complete message does not include the measurement result.

5. The method of claim 3, further comprising:

performing a second measurement, based on the second measurement information, during a remaining measurement period of the measurement period included in the first measurement information.

6. The method of claim 5, further comprising:
transmitting a measurement result based on the first measurement and a measurement result based on the second measurement to the base station.

7. The method of claim 1, further comprising:
transmitting capability information related to that the UE does not support early measurement report (EMR) measurement to the base station.

8. The method of claim 7,
wherein the first measurement information is received, based on that the capability information is transmitted.

9. A user equipment (UE) configured to operate in a wireless communication system, the UE comprising:

one or more transceivers;
one or more processors; and
one or more memories operably connectable to the at least one processor and storing instructions,
wherein based on that the instructions being executed by the at least one processor, perform operations comprising:

transmitting a request message to a base station,
wherein the request message is a Radio Resource Control (RRC) setup request message or an RRC resume request message;
receiving a response message to the request message from the base station,
wherein the response message is an RRC setup message or an RRC resume message, and
wherein the response message includes first measurement information for enhanced measurement;
performing a first measurement, based on that the UE is in an idle state or inactive state, and the first measurement information is received; and
transmitting a complete message to the base station,
wherein the complete message is an RRC setup complete message or an RRC resumption complete message, and
based on whether measurement report to be reported exists or not before the complete message being transmitted, the complete message includes or does not include the measurement result.

10. An apparatus in mobile communication comprising:

at least one processor; and
at least one memory operably connectable to the at least one processor and storing instructions,
wherein based on that the instructions being executed by the at least one processor, perform operations comprising:

transmitting a request message to a base station,
wherein the request message is a Radio Resource Control (RRC) setup request message or an RRC resume request message;
receiving a response message to the request message from the base station,
wherein the response message is an RRC setup message or an RRC resume message, and
wherein the response message includes first measurement information for enhanced measurement;
performing a first measurement, based on that the apparatus is in an idle state or inactive state, and the first measurement information is received; and
transmitting a complete message to the base station,
wherein the complete message is an RRC setup complete message or an RRC resumption complete message, and
based on whether measurement report to be reported exists or not before the complete message being transmitted, the complete message includes or does not include the measurement result.

11. A non-transitory Computer Readable Medium (CRM) storing instructions that, based on being executed by at least one processor, perform operations comprising:

transmitting a request message to a base station,
wherein the request message is a Radio Resource Control (RRC) setup request message or an RRC resume request message;
receiving a response message to the request message from the base station,
wherein the response message is an RRC setup message or an RRC resume message, and
wherein the response message includes first measurement information for enhanced measurement;
performing a first measurement, based on that a User Equipment (UE) is in an idle state or inactive state, and the first measurement information is received; and
transmitting a complete message to the base station,
wherein the complete message is an RRC setup complete message or an RRC resumption complete message, and
based on whether measurement report to be reported exists or not before the complete message being transmitted, the complete message includes or does not include the measurement result.

12. A method for performing communication, the method performed by a base station and comprising:

receiving a request message from a User Equipment (UE),
wherein the request message is a Radio Resource Control (RRC) setup request message or an RRC resume request message;
transmitting a response message to the request message to the UE,
wherein the response message is an RRC setup message or an RRC resume message,
wherein the response message includes first measurement information for enhanced measurement, and
wherein the first measurement is used by the UE to perform a first measurement, based on that a User Equipment (UE) is in an idle state or inactive state; and
receiving a complete message from the UE,
wherein the complete message is an RRC setup complete message or an RRC resumption complete message, and
based on whether measurement report to be reported exists or not before the complete message being transmitted, the complete message includes or does not include the measurement result.

13. The method of claim 12, further comprising:
initiating a Secondary Cell (SCell) setup and/or Secondary Cell Group (SCG) setup, based on that the complete message includes the measurement result,

14. The method of claim 12, further comprising:
transmitting second measurement information including information related to a target frequency that is the same as a target frequency for the first measurement to the UE.

15. The method of claim 14,
wherein the second measurement information is transmitted, based on that the complete message does not include the measurement result.

16. A base station configured to operate in a wireless communication system, the base station comprising:

one or more transceivers;
one or more processors; and
one or more memories operably connectable to the at least one processor and storing instructions,
wherein based on that the instructions being executed by the at least one processor, perform operations comprising:

receiving a request message from a User Equipment (UE),
wherein the request message is a Radio Resource Control (RRC) setup request message or an RRC resume request message;
transmitting a response message to the request message to the UE,
wherein the response message is an RRC setup message or an RRC resume message,
wherein the response message includes first measurement information for enhanced measurement, and

wherein the first measurement is used by the UE to perform a first measurement, based on that a User Equipment (UE) is in an idle state or inactive state; and

receiving a complete message from the UE,

wherein the complete message is an RRC setup complete message or an RRC resumption complete message, and

based on whether measurement report to be reported exists or not before the complete message being transmitted, the complete message includes or does not include the measurement result.

# FIG. 1

EP 4 611 422 A1

# FIG. 2

# FIG. 3

FIG. 4

FIG. 5

# FIG. 6a

# FIG. 6b

# FIG. 6c

EPC

NG Core

LTE/LTE-A

NR

UE

# FIG. 7

UE       PCell       SCell

RRC Connection Reconfiguration

UE Reconfiguration       NW Reconfiguration

RRC Connection Reconfiguration Complete

SCell activation message

Downlink signal (e.g., PDSCH)

Downlink signal (e.g., PDSCH)

SCell deactivation message

Downlink signal (e.g., PDSCH)

EP 4 611 422 A1

# FIG. 8

| Connected Mode(1) | Idle Mode(2) | RRC Connection setup(3) | Connected Mode(4) |

# FIG. 9

# FIG. 10

# FIG. 11

UE            NW

Measurement configuration through
RRCsetup/resume msg

Perform measurement

Measurement report through
RRCsetupComplete i.e. msg5

Initiate Scell/SCG

# FIG. 12

```
       ┌──────────┐                              ┌──────────┐
       │    UE    │                              │    NW    │
       └────┬─────┘                              └────┬─────┘
            │                                         │
            │     Measurement configuration through   │
            │◄──────── RRCsetup/resume msg ───────────│
            │                                         │
      ┌─────┴──────────────────────┐                  │
      │    Perform measurement      │                  │
      └─────┬──────────────────────┘                  │
            │                                         │
            │      RRCsetupComplete i.e. msg5         │
            │─────────────────────────────────────────►
            │                                         │
            │        Measurement configuration        │
            │◄──────────── for connected mode ─────────│
            │                                         │
  ┌─────────┴───────────────────────┐                 │
  │       If the measured target     │                 │
  │  in the RRC connection setup step │                 │
  │ matches the target that will be   │                 │
  │       measured in connected mode, │                 │
  │  continue the stopped measurement │                 │
  └─────────┬───────────────────────┘                 │
            │                                         │
            │      Report the measurement results     │
            │   in the connected mode periodically/   │
            │──────────── non-periodically ───────────►
            │                                         │
            │           Initiate Scell/SCG            │
            │◄────────────────────────────────────────│
            │                                         │
```

# FIG. 13

## INTERNATIONAL SEARCH REPORT

| International application No. |
|---|
| **PCT/KR2023/015405** |

### A. CLASSIFICATION OF SUBJECT MATTER

**H04W 24/08**(2009.01)i; **H04W 76/10**(2018.01)i; **H04W 76/27**(2018.01)i; **H04W 24/10**(2009.01)i

According to International Patent Classification (IPC) or to both national classification and IPC

### B. FIELDS SEARCHED

Minimum documentation searched (classification system followed by classification symbols)

H04W 24/08(2009.01); H04W 74/08(2009.01); H04W 76/15(2018.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RRC setup/resume request, enhanced measurement, RRC setup complete, early measurement report

### C. DOCUMENTS CONSIDERED TO BE RELEVANT

| Category* | Citation of document, with indication, where appropriate, of the relevant passages | Relevant to claim No. |
|---|---|---|
| A | MEDIATEK INC. Discussion on improvement on FR2 SCell/SCG setup/resume. R4-2215446, 3GPP TSG-RAN WG4 Meeting # 104bis-e, Electronic Meeting. 30 September 2022.<br>See section 2. | 1-16 |
| A | KR 10-2021-0114417 A (QUALCOMM INCORPORATED) 23 September 2021 (2021-09-23)<br>See paragraphs [0189]-[0211]; and claim 1. | 1-16 |
| A | ERICSSON. Discussion on study of improvement on FR2 Scell/SCG setup/Resume. R4-2216342, 3GPP TSG RAN WG4 Meeting #104-bis-e, Electric meeting. 30 September 2022.<br>See sections 2-3. | 1-16 |
| A | VIVO et al. Early measurement for EPS Fallback. R2-2205054, 3GPP TSG RAN WG2 #118-e. [Online]. 25 April 2022.<br>See sections 2-3. | 1-16 |
| A | KR 10-2021-0039393 A (SONY CORPORATION) 09 April 2021 (2021-04-09)<br>See paragraphs [0107]-[0128]; and claim 1. | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/015405**

| Patent document cited in search report | | | Publication date (day/month/year) | Patent family member(s) | | | Publication date (day/month/year) |
|---|---|---|---|---|---|---|---|
| KR | 10-2021-0114417 | A | 23 September 2021 | CN | 113302978 | A | 24 August 2021 |
| | | | | EP | 3912397 | A1 | 24 November 2021 |
| | | | | US | 2022-0116809 | A1 | 14 April 2022 |
| | | | | WO | 2020-147120 | A1 | 23 July 2020 |
| | | | | WO | 2020-147163 | A1 | 23 July 2020 |
| | | | | WO | 2020-147182 | A1 | 23 July 2020 |
| | | | | WO | 2020-147771 | A1 | 23 July 2020 |
| KR | 10-2021-0039393 | A | 09 April 2021 | CN | 112567867 | A | 26 March 2021 |
| | | | | EP | 3834571 | A1 | 16 June 2021 |
| | | | | JP | 2021-533685 | A | 02 December 2021 |
| | | | | JP | 7198909 | B2 | 04 January 2023 |
| | | | | US | 2021-0195458 | A1 | 24 June 2021 |
| | | | | WO | 2020-030501 | A1 | 13 February 2020 |

Form PCT/ISA/210 (patent family annex) (July 2022)